# FASCICULE DE BREVET EUROPEEN

(11) **EP 3 872 666 B1**
(45) Date de publication et mention de la délivrance du brevet: **19.08.2026**
(21) Numéro de dépôt: 21164203.8
(22) Date de dépôt: 28.01.2016
(51) Int. Cl.: G06F 21/57, G06F 21/51, H04L 9/32, G06Q 20/06, G06F 21/31, G06F 21/34, G06F 21/62, G06Q 20/22

(54) **SYSTÈMES ET PROCÉDÉS POUR LA GESTION D'ENGAGEMENTS EN RÉSEAU D'ENTITÉS SÉCURISÉES**
SYSTEME UND VERFAHREN ZUR VERWALTUNG VON VERNETZTEN VERPFLICHTUNGEN VON SICHEREN EINHEITEN
SYSTEMS AND METHODS FOR MANAGING NETWORKED COMMITMENTS OF SECURE ENTITIES

(30) Priorité: 30.01.2015 US 201562109772 P; 15.04.2015 FR 1553328; 24.12.2015 FR 1563289; 04.09.2015 FR 1558244; 15.01.2016 FR 1650352
(43) Date de publication de la demande: 01.09.2021
(62) Numéro(s) de document de la (des) demande(s) initiale(s) en application de l'article 76 CBE: 16712463.5 / 3 251 046
(73) Titulaire: Maim, Enrico, 8835 Feusisberg (CH)
(72) Inventeur: Maim, Enrico, 8835 Feusisberg (CH)

(56) Documents cités:
- US-A1- 2014 258 736
- SINGH PRABHJOT ET AL: "Performance Comparison of Executing Fast Transactions in Bitcoin Network Using Verifiable Code Execution", 2013 2ND INTERNATIONAL CONFERENCE ON ADVANCED COMPUTING, NETWORKING AND SECURITY, IEEE, 15 December 2013 (2013-12-15), pages 193 - 198, XP032551793, DOI: 10.1109/ADCONS.2013.42

## Description

### Domaine de l'invention

L'invention concerne d'une façon générale des procédés et systèmes d'identification et de transaction basés sur une architecture d'entités à capacité de traitement numérique en réseau de pair-à-pair (P2P dans la suite de la description). Elle concerne en particulier des systèmes et procédés mettant en œuvre des entités identifiées par clés cryptographiques et des engagements et transactions sécurisés de transferts d'unités de compte entre de telles entités.

### Etat de la technique

On connaît de nombreux systèmes et procédés où des clés (à savoir des clés publiques/privées cryptographiques) sont utilisées comme identités (clé publique pour identifier un individu ou un dispositif matériel respectif) et pour signer des engagements au nom de ces identités (clé privée).

Dans une architecture connue, les clés sont contrôlées par des entités informatiques formant les nœuds d'un réseau, et (les clés publiques) y sont communiquées de pair à pair en y associant des attributs.

Dans le sens commun, une identité peut être matérialisée par une clé si des caractéristiques (ou *attributs)* y sont associées et sont humainement interprétables, pour que l'identité représente une entité particulière reconnaissable par ces caractéristiques. On associe à une clé par exemple une photo, un nom, une adresse email, un numéro de téléphone, l'organisation ou le service auquel on appartient, le rôle et le niveau de management dans cette organisation, un signe distinctif, des données biométriques, un relevé d'identité bancaire, le numéro de sécurité sociale, les données d'un passeport électronique signées par un gouvernement, etc., ou encore un ensemble de telles caractéristiques.

On connaît également différentes architectures de traitement sécurisées entre différents équipements, notamment celles basées sur chaînes de blocs.

On connaît également des systèmes-sur-puce sécurisés, notamment pour application dans les objets connectés.

Le document SINGH PRABHJOT ET AL: "Performance Comparison of Executing Fast Transactions in Bitcoin Network Using Verifiable Code Execution", 2013 2ND INTERNATIONAL CONFERENCE ON ADVANCED COMPUTING, NETWORKING AND SECURITY, IEEE, 15 décembre 2013 (2013-12-15), pages 193-198, XP032551793, divulgue une adaptation de l'exécution vérifiable de code développée par Pioneer pour l'adapter à Bitcoin afin d'obtenir une confirmation rapide des transactions pour les transaction nécessitant une certaine rapidité (les autres utilisant le Pow classique). Un horodatage et un nonce sont d'abord envoyés du payant au payé, la plateforme (dynamic root of trust) réponds dans un délai donné avec une somme de contrôle (checksum) de son code de base et du nonce. Dans un second temps, la plateforme du payé calcule un haché de l'exécutable et du nonce, puis le fournit au payeur avant de mettre en place un environnement d'exécution sécurisé et invoquer l'exécutable. Le document US 2014/258736A1 (MERCHAN JORGE GUAJARDO [US] ETAL) 11 septembre 2014 (2014-09-11 ) divulgue une méthode pour sécuriser l'exécution (intégrité et confidentialité des données). Un processeur génère une paire de clefs à partir d'un PUF et l'utilise pour chiffrer les données. Une signature ou MAC des données est aussi établie. Le code du programme est aussi haché et signé avant que le programme ne soit stocké dans un stockage non sécurisé. Le haché sert aussi a vérifier que les données ont été générées par un certain programme. Le script2hash dans bitcoin est le haché d'un script de dépense (redeem script) qui permet de générer une adresse de script P2SH et de l'utiliser pour identifier le script stocké dans la blockchain a utiliser pour gérer une certaine transaction.

### Résumé de l'invention

La présente invention vise à proposer différents systèmes et procédés capables, d'une façon sécurisée, de mettre en œuvre des programmes ou engagements exécutables au niveau d'un ensemble de nœuds d'un réseau, pour différentes applications. L'invention est définie par la revendication indépendante jointe.

Dans une mise en œuvre, on vise à proposer une architecture transactionnelle basée sur un ensemble d'entités constituant des nœuds d'un réseau dits « Wallet Nodes » (WN) aptes à exécuter des codes exécutables « Wallet Program » (WP) quelconques et interagissant entre eux par des « Wallet Messages » (WM), et visant à ce que des utilisateurs puissent avoir confiance les uns en les autres dans les résultats d'exécution de leurs WN respectifs. Dans cette perspective :
* ils exécutent pour leurs interactions les mêmes codes exécutables ;
* ces codes exécutables peuvent jouer le rôle de contrats exécutables formés d'engagements réciproques passés entre les WN, où
   - l'association entre un WM et le WP qui l'a généré est garantie, de même que le fait que le message n'a pas été altéré ; et
   - un WN exécutant un WP donné n'accepte que les WM générés par le même WP donné dans un autre
   WN

La présente invention vise également à proposer que cette architecture puisse être mise en œuvre au choix :
* dans un ou plusieurs serveurs centralisés, avec une garantie de bonne exécution au niveau du/des serveur(s) ;
* en recourant à des contrats de type « Smart Contract » (implémentés notamment sur Ethereum), avec une garantie de bonne exécution par les « Mineurs » ;
* au niveau de « Systems on Chip » (SoC) pour chacun des WN, avec signature des WM par les SoC eux-mêmes ;
* au niveau de la partie sécurisée d'un processeur, telle que le « Trusted Execution Environment » (TEE).

Avantageusement l'invention, qui peut être mise en œuvre au sein de dispositifs divers, des téléphones, aux clés USB, au sein des objets de l'IoT, etc., permet d'éviter dans certaines applications l'utilisation d'une chaîne de sécurité unique et partagée de type « Blockchain ». Par exemple, pour un WP de transfert d'unités de compte entre deux WN maintenant des soldes respectifs d'unités de compte, le risque de « double spend » (qui a motivé l'invention de la blockchain de Bitcoin) n'existe pas dans la mesure où le WM du transfert en question n'est pas altéré et le WP s'exécute de manière sécurisée dans ces deux WN (pour respectivement effectuer la soustraction des unités transférées du solde du WN qui les transfère et l'addition des unités transférées au solde du WN à qui elles sont transférées).

En outre pour des applications qui nécessiteraient un séquencement et/ou une prioritisation d'actions, ou d'établir la preuve de l'envoi d'un WM à un temps donné ou relativement au temps d'envoi ou réception d'un autre message, on peut aussi éviter le recours à une chaîne de type « Blockchain » en prévoyant que les WN ont des horloges synchronisées (en utilisant un protocole tel que NTP) et les WM, horodatés de manière sécurisée par les WN qui les émettent, sont enregistrés dans un registre (qui peut être central, partiellement décentralisé, ou mis en œuvre en DHT- Distributed Hash Table - par exemple en utilisant un protocole P2P de type Kademlia).

En particulier, l'invention vise à permettre de mettre en œuvre des protocoles transactionnels équivalents à Bitcoin ou ses descendants (tels que Ethereum), avec le registre précité plutôt qu'une chaîne de blocs, et donc sans besoin d'attente de confirmations de transactions (qui, selon l'approche adoptée, prennent aujourd'hui de l'ordre de la dizaine de secondes à la dizaine de minutes chacune) et avec des volumes de transactions pratiquement illimités (alors que Bitcoin est aujourd'hui limité à 7 transactions par seconde environ, et que par comparaison, le réseau Visa est conçu pour opérer avec des pics de volumes de 10,000 transactions par seconde).

Tout d'abord, et d'une manière générale pour les usages courants de la cryptographie, l'invention vise une approche par attributs qui sont reconnus en P2P pour obtenir une facilité d'utilisation (« usability » en terminologie anglo-saxonne) supérieure à l'état d'art et répondre au problème du manque de confiance par rapport aux infrastructures de clés publiques centralisées et hiérarchiques actuelles (notamment les utilisateurs ne peuvent pas évaluer la crédibilité de chacune des nombreuses autorités de certification racine dans leurs navigateurs).

Pour introduire un premier aspect de l'invention, on observe qu'un engagement signé avec une clé ne vaut que tant que cette signature n'est pas démentie. En effet, son propriétaire peut dénier l'engagement en prétendant que la clé n'est pas à lui ou n'était pas sous son contrôle lorsque la signature a été effectuée (usurpation de clé).

On observe aussi que la fiabilité d'une signature d'engagement peut être appréciée comme ce que le signataire « aurait à perdre » sur les plans monétaire et social s'il la déniait.

L'invention vise ainsi, dans un aspect particulier, à fiabiliser les engagements :
- en générant, dans le cas d'un défaut d'engagement, la preuve de ce défaut et, le cas échéant, le constat du déni de l'engagement ;
- en bloquant alors les engagements dont l'entité défaillante (et ses responsables, cf. plus loin) sont elles-mêmes bénéficiaires (après un délai de grâce), tant que le lien entre les responsabilités d'entités mises en œuvre avec l'invention et leurs conséquences juridiques au niveau de la société ne sont pas établies.

On propose ainsi, selon une premier aspect, un procédé de gestion d'engagements entre entités formant les nœuds d'un réseau, chaque entité étant logée dans une unité de traitement informatique, caractérisé en ce qu'il comprend les étapes suivantes :
- établir des engagements entre entités fournisseurs d'engagements et entités bénéficiaires d'engagements, une même entité pouvant être à la fois fournisseur d'engagement vis-à-vis d'une ou plusieurs autres entités bénéficiaires d'engagement et bénéficiaire d'engagement vis-à-vis d'autres entités fournisseurs d'engagement,
- lors du défaut d'un engagement de la part d'une entité fournisseur d'engagement défaillante, constaté à partir d'une entité bénéficiaire de ce même engagement, communiquer à l'entité fournisseur à partir de ladite entité bénéficiaire, et à au moins une autre entité (entité amont) dont l'entité fournisseur défaillante est bénéficiaire, une indication de défaut d'engagement, et
- en réponse à cette communication, altérer au moins un engagement dont l'entité fournisseur défaillante est bénéficiaire.

Ce procédé comprend avantageusement mais facultativement les caractéristiques additionnelles suivantes, prises individuellement ou en toutes combinaisons techniquement compatibles :
* les engagements sont établis sur la base (i) d'une reconnaissance par l'entité bénéficiaire d'engagement d'une association entre attribut(s) spécifique(s) à l'entité fournisseur d'engagement et une clé de chiffrement univoquement associée à ladite entité fournisseur d'engagement, et (ii) d'une reconnaissance par l'entité fournisseur d'engagement d'une association entre attribut(s) spécifique(s) à l'entité bénéficiaire d'engagement et une clé de chiffrement univoquement associée à ladite entité bénéficiaire d'engagement.
* les altérations sont effectuées sélectivement par comparaison entre les attributs spécifiques à l'entité fournisseur d'engagement qui sont reconnus par l'entité bénéficiaire et des attributs de ladite entité fournisseur, spécifiques à celle-ci dans le cadre de la reconnaissance de l'association avec sa clé de chiffrement par des entités fournisseurs d'engagements envers elle-même (entités amont) dont les engagements sont à altérer, dans le but de déterminer d'éventuelles usurpations de clé.
* ladite comparaison comprend la détection d'informations incohérentes pour un même type d'attribut, auquel cas un engagement vers l'entité fournisseur d'engagement défaillante n'est pas altéré.
* les attributs comprennent des types d'attributs forts désignant de façon unique des entités et des attributs faibles désignant de façon potentiellement non unique des entités.
* la détection d'informations incohérentes comprend la détection d'attributs forts contradictoires.
* la détection d'informations incohérentes comprend l'établissement d'un degré de cohérence pour un ensemble d'attributs.
* les altérations sont effectuées en fonction de valeurs en unités compte de l'engagement en défaut et des engagements dont l'entité fournisseur défaillante est bénéficiaire.
* le procédé comprend en outre l'établissement, pour chaque entité, d'un poids d'engagement *(exposure weight)* sur la base du cumul de valeurs en unités de compte pour des engagements dont ladite entité est bénéficiaire, représentatif d'un risque de défaut d'engagement.

On propose selon un second aspect de l'invention un procédé d'établissement de scores de fiabilité d'un ensemble d'entités formant les nœuds d'un réseau, chaque entité étant logée dans une unité de traitement informatique, les entités étant susceptibles d'être liées entre elles par des processus d'identification unidirectionnelle ou réciproque sur la base d'une reconnaissance par une entité d'une association entre attribut(s) spécifique(s) à l'autre entité et une clé de chiffrement univoquement associée à ladite autre entité, et des engagements entre entités étant susceptibles d'être générés, comprenant les étapes suivantes :
- déterminer un groupe de premières entités ayant mis en jeu un processus d'identification réciproque forte,
- déterminer des deuxièmes entités liées chacune à au moins l'une des premières entités par des processus d'identification réciproques,
- déterminer des troisièmes entités liées avec les deuxièmes entités par des processus d'identification des troisièmes entités par les deuxièmes entités,
- sur la base d'un comptage du nombre d'identifications faites par les deuxièmes entités sur les troisièmes entités, déterminer un score de fiabilité des troisièmes entités pour des engagements par lesdites troisièmes entités.

Ce procédé comprend avantageusement mais facultativement les caractéristiques additionnelles suivantes, prises individuellement ou en toutes combinaisons techniquement compatibles :
* la dernière étape met en jeu plusieurs comptages effectués séparément pour chacun des attributs dont l'association est reconnue.
* le procédé comprenant en outre la répétition du procédé sur la base d'un nouveau groupe de premières entités comprenant les premières entités d'origine et les troisièmes entités, et ainsi de suite.
* le procédé comprend en outre la détermination de scores autorité des deuxièmes entités sur la base d'un comptage des identifications réalisées par ces dernières.
* le comptage mis en œuvre pour déterminer les scores de fiabilité est pondéré par les scores autorité.

On propose selon un autre aspect de l'invention un système de certification de produits dans une chaîne logistique ou de transformation, à chaque produit étant associé un tag destiné à contenir des certifications réalisées en différentes étapes de la chaîne, caractérisé en ce que le système comprend un ensemble d'équipements répartis sur la chaîne et pourvus chacun d'un wallet node, et en ce que les wallet nodes comprennent chacun un wallet program de manière à réaliser de façon sécurisée :
- un transfert de la propriété d'un tag d'un wallet node à un autre, seul un wallet node pouvant être propriétaire d'un tag à un instant donné,
- un transfert du contrôle d'un tag d'un wallet node à un autre, seul un wallet node pouvant contrôler un tag à un instant donné,
de manière à certifier à la fois l'authenticité d'un produit et sa localisation dans la chaîne.

Dans un autre système de certification de produits dans une chaîne logistique ou de transformation, à chaque produit est associé un tag destiné à contenir des certifications réalisées par des équipements en différentes étapes de la chaîne, et le système comprend un équipement comprenant des moyens pour stocker dans un tag des données représentatives de façon unique de propriétés physiques, chimiques ou optiques du produit sur la base d'une analyse correspondante d'une région du produit dans laquelle est apposé le tag au niveau dudit équipement, ces données étant par la suite accessibles pour, sur la base d'analyses identiques ou équivalentes, vérifier si le tag est resté associé au même produit.

Avantageusement mais facultativement dans ce système, l'analyse est réalisée à l'aide d'un équipement portatif, et le système comprenant en outre un moyen pour placer l'équipement portatif dans une position de référence par rapport au produit lors de l'analyse à l'aide de l'équipement.

Il est en outre proposé selon l'invention un système de gestion d'engagements entre entités ayant une capacité de traitement numérique et formant des nœuds d'un réseau, les nœuds étant liés par des engagements non conditionnels entre émetteurs d'engagement et acquéreurs d'engagements, ayant des valeurs en unités de compte communes à tous les engagements, chaque nœud comportant une mémoire contenant :
- des soldes d'engagements non conditionnels émetteur par émetteur,
- des montants d'engagements non conditionnels disponibles pour d'autres nœuds (Montants+) ou recherchés à partir d'autres nœuds (Montants-), émetteur par émetteur,
   des unités de compte correspondant à des engagements pouvant être transférées entre les nœuds, et les soldes et montants au niveau des différents nœuds étant recalculés en conséquence,
   les nœuds étant également liés par des engagements conditionnels de différents types, un engagement conditionnel étant déclenché en faveur d'un nœud bénéficiaire donné lors de la survenance d'un certain évènement déclencheur et requérant un transfert d'unités de compte vers un certain nœud déterminé par le type d'engagement conditionnel, et à différents types d'évènements déclencheurs correspondant différents types d'engagements conditionnels,
   la mémoire de chaque nœud contenant en outre :
- des soldes, par type d'engagement conditionnel, d'engagements conditionnels émetteur par émetteur,
- des capacités d'engagements conditionnels, par type d'engagement conditionnel et par nœud bénéficiaire,
le système comprenant en outre des moyens pour, lors de la survenance d'un évènement déclencheur, transférer des unités de compte entre nœuds en fonction des données de soldes, de montants et de capacités couramment mémorisées dans les nœuds, de manière à réaliser tout ou partie du transfert requis, et mettre à jour lesdites données dans les différents nœuds impliqués.

Ce système comprend avantageusement mais facultativement les caractéristiques additionnelles suivantes, prises individuellement ou en toutes combinaisons techniquement compatibles :
* le transfert requis est au moins partiellement réalisé par consommation d'un ou plusieurs soldes d'un engagement conditionnel disponibles à cet effet dans le nœud bénéficiaire.
* un transfert requis non entièrement satisfait par consommation de soldes est réalisé ou complété par transfert d'unités de comptes à partir d'un ou plusieurs nœuds fournisseurs d'engagements conditionnels envers le nœud bénéficiaire, en fonction des soldes d'engagements conditionnels au niveau de ces nœuds fournisseurs, lesdits moyens étant aptes à mettre à jour lesdits soldes d'engagements conditionnels.
* un transfert requis non entièrement satisfait par consommation de soldes et le cas échéant par transfert d'unités de compte à partir de nœuds fournisseurs d'engagements conditionnels est réalisé ou complété par transfert d'unités de compte à partir d'autres nœuds (nœuds aval) bénéficiant d'engagements conditionnels de la part du nœud bénéficiaire.
* un transfert requis non entièrement satisfaits par consommation de soldes et le cas échéant par transfert d'unités de compte à partir de nœuds fournisseurs d'engagements conditionnels, et le cas échéant par transfert d'unités de compte à partir de nœuds aval est réalisé ou complété par transfert d'unités de compte à partir d'autres nœuds bénéficiant aussi d'engagements conditionnels de la part des nœuds fournisseurs d'engagements.
* le réseau de nœuds est parcouru vers d'autres nœuds fournisseurs d'engagements conditionnels vers l'amont et/ou vers d'autres nœuds bénéficiaires d'engagements conditionnels vers l'aval jusqu'à ce que le transfert requis soit réalisé en totalité.
* un type d'évènement déclencheur est constitué par un transfert d'engagement d'un premier fournisseur d'engagement vers un second fournisseur d'engagement, le transfert d'unités de compte requis étant celui, du premier fournisseur d'engagement vers le second fournisseur d'engagement, devant résulter de ce transfert d'engagement pour la valeur en unités de compte de cet engagement.

Il est proposé par ailleurs un système de gestion d'engagements entre entités ayant une capacité de traitement numérique et formant des nœuds d'un réseau, les nœuds étant liés par des engagements non conditionnels entre émetteurs d'engagement et acquéreurs d'engagements, ayant des valeurs en unités de compte communes à tous les engagements, chaque nœud comportant une mémoire contenant :
- des soldes d'engagements émetteur par émetteur,
- des montants d'engagements disponibles pour d'autres nœuds (Montants+) ou recherchés à partir d'autres nœuds (Montants-), émetteur par émetteur,

des unités de compte correspondant à des engagements pouvant être transférées entre les nœuds, et les soldes et montants au niveau des différents nœuds étant recalculés en conséquence, et le réseau de nœuds constituant un réseau de flots dont les capacités des arêtes entre nœuds sont déterminées en fonction des engagements disponibles et des engagements recherchés pour une entité émettrice donnée,
et dans lequel, un transfert d'unités de compte d'une première entité à un deuxième entité est mis en œuvre par les étapes suivantes :
   - si un solde d'engagement au niveau de la première entité pour une entité émettrice correspondant à la deuxième entité est suffisant, réaliser le transfert d'unités de compte requis,
   - si ce solde est insuffisant, augmenter le montant d'engagements recherchés (Montant-) pour cette même entité émettrice au moins pour les unités de compte manquantes,
   - exécution d'un processus d'équilibrage de charge du réseau de flots en vue de satisfaire tout ou partie du de cette recherche, et
   - réaliser ou compléter le transfert d'unités de compte dans la mesure des engagements recherchés qui ont été satisfaits par cet équilibrage.

Selon un autre aspect il est proposé un système-sur-puce (SoC), caractérisé en ce qu'il comprend en combinaison :
- un processeur (Microcontroller),
- un sous-système de codes exécutables quelconques (Wallet Programs) aptes à être exécutés par le système-sur-puce et par d'autres systèmes-sur-puce,
- un sous-système de gestion des codes exécutables (Check/Load) comprenant un code exécutable spécifique de sélection/chargement desdits codes exécutables quelconques,
- un sous-système d'entrée/sortie (I/O) permettant au système-sur-puce de communiquer avec d'autres systèmes-sur-puce pour échanger des des messages (Wallet Messages) avec d'autres systèmes-sur-puce, au moins certains des messages contenant le haché du contenu d'un code exécutable,
- un sous-système de signature (Sign) des messages échangés, apte à générer un haché d'un code exécutable couramment chargé dans le système-sur puce,
le système-sur-puce étant apte :
* en réaction à la réception d'un message (Wallet Message) contenant un haché, à amener ledit code exécutable spécifique de sélection/chargement à sélectionner et charger pour exécution, à partir dudit sous-système de codes exécutables quelconques (Wallet Programs), le code exécutable quelconque dont le haché du contenu correspond audit haché inclus contenu dans ledit message (Wallet Message) ;
* avant la signature d'un message (Wallet Message) à émettre, à amener le sous-système de signature (Sign) à générer ou à vérifier le haché du code exécutable quelconque couramment chargé pour inclusion dans ledit message, garantissant ainsi que le même haché est re-propagé d'un message reçu à un message émis.

Avantageusement mais facultativement, ce système comprend une mémoire rémanente pour un ensemble de variables d'état, seul le code exécutable (Wallet Program) possédant une variable d'état étant apte à la modifier.

On propose selon un autre aspect de l'invention un système-sur-puce (SoC) caractérisé en ce qu'il comprend en combinaison :
- un processeur (Microcontroller),
- un sous-système de codes exécutables quelconques (Wallet Programs) aptes à être exécutés par le système-sur-puce et par d'autres systèmes-sur-puce,
- un sous-système de gestion des codes exécutables (Check/Load) comprenant un code exécutable spécifique de sélection/chargement desdits codes exécutables quelconques,
- un sous-système d'entrée/sortie (I/O) permettant au système-sur-puce de communiquer avec d'autres systèmes-sur-puce pour échanger des messages (Wallet Messages) avec d'autres systèmes-sur-puce, au moins certains des messages contenant un corps chiffré et le haché du contenu d'un code exécutable,
- un sous-système de signature (Sign) des messages échangés, apte à générer un haché d'un code exécutable couramment chargé dans le système-sur puce,
le système-sur-puce étant apte :
* en réaction à la réception d'un message (Wallet Message) contenant un haché pendant qu'un certain code exécutable (Wallet Program) est en cours d'exécution par le processeur ou s'apprête à être exécuté, à ne déchiffrer le corps chiffré du message reçu que si le haché contenu dans le message reçu correspond au haché du code d'exécutable en cours d'exécution ou à exécuter ; et
* avant la signature d'un message (Wallet Message) à émettre, à amener le sous-système de signature (Sign) à générer ou à vérifier le haché du code exécutable quelconque couramment chargé pour inclusion dans ledit message, garantissant ainsi que le même haché est re-propagé d'un message reçu à un message émis.

Il est également proposé :
- le chiffrement des messages émis est effectué par le sous-système de signature.
- une utilisation d'au moins un système-sur-puce tel que défini ci-dessus pour réaliser une identification anonyme à partir de documents d'identité à partir desquels peuvent être lues des signatures officielles.
- une utilisation de deux systèmes-sur-puce tels que définis plus haut, pour réaliser un transfert d'unités de valeur par débit d'un solde (Balance) constitué par une variable d'état dans l'un des systèmes-sur-puce et crédit d'un solde constitué par une variable d'état dans l'autre système-sur-puce.

Avantageusement mais facultativement, cette utilisation met également en œuvre au moins un système-sur-puce témoin associé à un système-sur-puce d'identification ou de transfert de valeur et apte répliquer au moins en partie les opérations exécutées dans ce dernier.

Il est également proposé un dispositif de traitement de données, comprenant des moyens de traitement et de mémorisation et des moyens de communication avec d'autres dispositifs de traitement de données, caractérisé en ce qu'il comprend un système-sur-puce tel que défini plus haut et un canal de communication bidirectionnelle filaire ou sans fil entre les moyens de traitement et le système-sur-puce, ce dernier étant apte à échanger des messages avec d'autres systèmes-sur-puce via lesdits moyens de communication du dispositif.

Dans un mode de réalisation, le système-sur-puce est logé dans une unité distincte du dispositif de traitement.

Dans un autre mode de réalisation, le système-sur-puce est intégré au dispositif de traitement.

On propose selon un autre aspect encore un système pour l'exécution sécurisée de programmes dans une architecture comprenant un ensemble d'équipements reliés en réseau, caractérisé en ce qu'il comprend dans au moins un équipement, un système-sur-puce (SoC) sécurisé dans lequel est mémorisé de façon inaccessible autrement que par le SoC une clé privée de SoC,
un SoC pouvant communiquer avec un autre équipement uniquement par des messages et étant apte à exécuter des programmes seulement en réponse à la réception de messages,
un SoC étant apte à communiquer à d'autres équipements une clé publique de SoC correspondant à ladite clé privée de SoC et certifiée par le fabricant du SoC,
un SoC étant apte à mémoriser au moins un programme à exécuter et à réaliser un haché du ou de chaque programme,
l'équipement étant apte en outre à adresser au SoC un message contenant des données d'entrée (input) pour un programme à exécuter, chiffrées avec ladite clé publique de SoC, ainsi que le haché dudit programme, et une autre clé publique destinée à chiffrer le résultat de l'exécution dudit programme sur lesdites données d'entrée, pour déchiffrement à l'aide d'une autre clé privée correspondante,

le SoC étant apte, en réponse à un tel message contenant des données d'entrée, de façon sécurisée, (i) vérifier que le haché du programme à exécuter sur les données d'entrée une fois déchiffrées correspond au haché reçu avec lesdites données d'entrée chiffrées, (ii) déchiffrer les données d'entrée reçues de l'équipement, et (iii) seulement en cas de correspondance entre les hachés, à exécuter le programme, à l'exclusion de toutes autres instructions, sur les données d'entrée après déchiffrement, à l'exclusion de toutes autres données, puis à chiffrer le résultat de l'exécution avec ladite autre clé publique et envoyer le résultat ainsi chiffré, à l'exclusion de tout autre résultat sauf ceux éventuellement prévus par construction dans le SoC, à l'équipement,
de manière à assurer l'inaccessibilité sans discontinuité à la fois des données d'entrée, de leur traitement et du résultat du traitement.

Ce système comprend avantageusement mais facultativement les caractéristiques additionnelles suivantes, prises individuellement ou en toutes combinaisons techniquement compatibles :
* le déchiffrement des données d'entrée chiffrées est également effectué seulement en cas de correspondance entre les hachés.
* un message contenant un programme à exécuter par le SoC contient également un haché dudit programme.
* le SoC est apte à effacer un programme après exécution.
* le haché reçu avec des données d'entrée est utilisé pour désigner un programme donné à exécuter parmi un ensemble de programmes mémorisés dans le SoC.
* les opérations (i), (ii) et (iii) sont mises en œuvre par le SoC à l'exclusion de toute autre opération.
* le système comprend une pluralité de SoC aptes à s'échanger des messages entre eux, dans lequel chaque message contient un haché d'un programme à exécuter par le SoC recevant ce message.
* deux SoC sont aptes à exécuter deux programmes identiques, cette identité étant garantie par l'identité des hachés, lesdits programmes étant représentatifs d'engagements réciproques entre deux entités associées aux SoC.
* deux SoC sont aptes à exécuter deux programmes seulement si une correspondance entre eux est établie au niveau des SoC, cette correspondance étant garantie par une correspondance entre hachés, lesdits programmes correspondants étant représentatifs d'engagements réciproques entre deux entités associées aux SoC.
* la correspondance entre hachés est garantie par une spécification commune mémorisée dans chaque SoC et par un haché de cette spécification contenu dans chaque message circulant entre les SoC.

Enfin il est proposé selon l'invention un procédé d'exécution sécurisée de programmes dans une architecture comprenant un ensemble d'équipements reliés en réseau, avec dans au moins un équipement, un système-sur-puce (SoC) sécurisé dans lequel est mémorisé de façon inaccessible autrement que par le SoC une clé privée de SoC, un SoC pouvant communiquer avec un autre équipement uniquement par des messages et étant apte à exécuter des programmes seulement en réponse à la réception de messages, un SoC étant apte à communiquer à d'autres équipements une clé publique de SoC correspondant à ladite clé privée de SoC et certifiée par le fabricant du SoC, et un SoC étant apte à mémoriser au moins un programme à exécuter et à réaliser un haché du ou de chaque programme, le procédé comprenant les étape suivantes :
- envoi par un équipement à un SoC d'un message contenant des données d'entrée (input) pour un programme à **exécuter,** chiffrées avec ladite clé publique de SoC, ainsi que le haché dudit programme, et une autre clé publique destinée à chiffrer le résultat de l'exécution dudit programme sur lesdites données d'entrée, pour déchiffrement à l'aide d'une autre clé privée correspondante,

- en réponse à la réception de ce message, mise en œuvre au niveau du SoC, de façon sécurisée, des sous-étapes suivantes :
   (i) vérifier que le haché du programme à exécuter sur les données d'entrée une fois déchiffrées correspond au haché reçu avec lesdites données d'entrée chiffrées,
   (ii) déchiffrer les données d'entrée reçues de l'équipement, et
   (iii) seulement en cas de correspondance entre les hachés, à exécuter le programme, à l'exclusion de toutes autres instructions, sur les données d'entrée après déchiffrement, à l'exclusion de toutes autres données, puis à chiffrer le résultat de l'exécution avec ladite autre clé publique et envoyer le résultat ainsi chiffré, à l'exclusion de tout autre résultat sauf ceux éventuellement prévus par construction dans le SoC, à l'équipement, de manière assurer l'inaccessibilité sans discontinuité à la fois des données d'entrée, de leur traitement et du résultat du traitement.

Il est proposé en outre un système pour d'exécution de codes exécutables « Wallet Program » (WP) quelconques par des nœuds d'un réseau dits « Wallet Nodes » (WN), interagissant entre eux par des « Wallet Messages » (WM), et visant à ce que des utilisateurs puissent avoir confiance les uns en les autres dans les résultats d'exécution de leurs WN respectifs, chaque noeud comportant à cet effet un processeur et une mémoire, caractérisé en ce que:
- deux noeuds sont aptes à nteragir l'un avec l'autre uniquement en exécutant au niveau de chaque noeud le même code exécutable,
- un code exécutable (WP) exécuté au niveau de deux noeuds implémente des engagements réciproques passés entre les deux noeuds,
- des moyens sont prévus pour garantir qu'un Wallet Message donné a été généré par un code exécutable (WP) donné,,
- des moyens sont prévus pour garantir l'intégrité de chaque Wallet message, et
- un Wallet Node exécutant un code exécutable (WP)est apte à recevoir en entrée seulement un Wallet Message généré par le même code exécutable (WP) dans un autre noeud.

Il est proposé selon l'invention un procédé de 'trusted execution' de codes exécutables (WP) quelconques par des nœuds (WN) d'un réseau, interagissant entre eux par des messages (WM), comprenant les étapes suivantes:
* les noeuds exécutent les mêmes codes exécutables pour leurs interactions ;
* ces codes exécutables jouent le rôle de contrats exécutables formés d'engagements réciproques passés entre les noeuds, où
   - l'association entre un message et le code exécutable qui l'a généré est garantie, de même que le fait que le message n'a pas été altéré ; et
   - un noeud exécutant un code exécutable donné n'accepte que les messages générés par le même code exécutable donné dans un autre noeud.

### Brève description des dessins

L'invention sera mieux comprise à partir de la description qui suit, donnée en référence aux dessins annexés sur lesquels :
Les Figures 1 illustrent un procédé consistant à geler les engagements dont une entité défaillante est bénéficiaire,
Les Figures 2 illustrent un procédé d'exécution d'engagements de capavité de bienveillance,
La Figure 3 illustre la gestion d'un engagement multi-fournisseurs,
La Figure 4 est un exemple simplifié d'une chaîne d'engagements de capacité de bienveillance mise en œuvre grâce à l'invention,
La Figure 5 illustre schématiquement les constituants d'une puce électronique implémentant un Wallet Node selon l'invention,
La Figure 6 illustre schématiquement un processus d'identification anonyme à partir d'un passeport selon l'invention,
La Figure 7 illustré schématiquement un procédé de transfert d'unités de compte mettant en jeu deux Wallet Nodes selon l'invention,
La Figure 8 illustre schématiquement un procédé de blocage d'unités de compte mettant en jeu un Wallet Node « aidant » et un Wallet Node « aidé »,
La Figure 9 illustre la mise en œuvre d'un nonce cryptographique en relation avec un Wallet Node, et
La Figure 10 illustre un procédé de transfert d'unités de compte entre Wallet Nodes, mettent en jeu en outre des Wallet Nodes « témoins ».

### Description détaillée de formes de réalisation préférées

### Plan

On va décrire tout d'abord un certain nombre d'usages des WN / WP / WM dans la mise en œuvre d'engagements exécutables, à savoir :
* comment des entités matérialisées par des WN peuvent représenter des individus ou des dispositifs leur appartenant, les clés de ces WN servant à les identifier, et comment renforcer leur fiabilité de non-répudiation, sans recours à une autorité de certification ;
* comment des entités matérialisées par des WN peuvent assurer la traçabilité de produits dans une chaîne logistique ;
* comment des entités matérialisées par des WN peuvent émettre des engagements de coopération ou d'entraide notamment en cas d'événements inattendus ;
* comment des engagements d'entités peuvent servir comme engagements de fourniture de biens ou services, un engagement d'un fournisseur donné pouvant servir à se faire fournir par d'autres.

(Dans la description qui suit, on utilisera indifféremment le terme « entité », « Wallet Node » ou WN pour désigner un Wallet Node. Par ailleurs, le terme « utilisateur », sauf lorsque l'on parle explicitement d'un utilisateur humain, désignera en général un dispositif ou un programme qui est lui est associé. Par exemple, une indication du type « l'utilisateur A envoie à l'utilisateur B telle donnée » signifiera que « le dispositif ou programme associé à l'utilisateur A utilise envoie telle donnée au dispositif ou programme associé à l'utilisateur B ». Enfin, vis-à-vis d'un dispositif ou programme donné, le terme « utilisateur » pourra dans certains cas désigner un autre dispositif ou programme.)

### Echange de clés publiques

Pour s'identifier de manière décentralisée, des individus peuvent, via des terminaux intelligents respectifs, s'échanger leurs clés publiques respectives directement et se confirmer les uns les autres les attributs qui y sont associés. Il est essentiel à cette étape de se protéger d'une attaque de personne interposée dite MitM (« Man in the Middle attack »). Un exemple de méthode pour que deux individus s'échangent leurs clés sans risque de MitM (méthode adaptable pour n individus) est le suivant :
1. Un premier utilisateur (et son terminal, par exemple un téléphone mobile) s'approche d'un autre utilisateur et lui montre un Nonce (un nombre aléatoire servant une seule fois), présenté sous forme d'un QR code généré dans son terminal à partir de ce Nonce.
2. Ledit autre utilisateur (qui se trouve à proximité, au moyen de son terminal) photographie ce QR code, l'interprète pour reconstituer ce Nonce, calcule son haché (par haché on entend le résultat de l'application d'une fonction de hachage cryptographique prédéterminée), et retourne au premier utilisateur sa propre clé publique en clair et sa signature dudit haché + sa propre clé. (A noter que, au lieu - ou en plus - du QR code, un passphrase secret peut être communiqué par oral, ceci peut se faire par téléphone si l'autre utilisateur n'est pas à proximité, et l'autre utilisateur calcule dans son terminal le haché de ce passphrase au lieu du haché du Nonce, puis le retourne avec sa clé et sa signature.)
3. Le terminal du premier utilisateur vérifie la signature par rapport à la clé reçue et au Nonce (ou passphrase) et enregistre la clé (publique) de l'autre utilisateur.
4. Dans la mesure où leurs terminaux sont fiables (cf. « Wallet Node » décrit plus loin), les deux utilisateurs peuvent maintenant se communiquer des informations chiffrées (optionnellement en générant/utilisant une clé symétrique commune par Diffie-Hellman) - à commencer bien sûr par la communication par le premier utilisateur de sa clé (publique) chiffrée au moyen de la clé (publique) de l'autre utilisateur. Ces échanges incluent d'autres clés que chaque utilisateur a pu auparavant échanger en utilisant la même méthode.

D'autres procédés utilisant aussi une approche « out of band channel » (et nécessitant aussi d'utiliser un terminal fiable) peuvent être mis en œuvre pour réaliser cet échange de clés publiques en évitant le MitM, notamment le procédé connu SafeSlinger qui est cependant plus complexe car conçu pour optimiser le cas où chacun des utilisateurs d'un groupe (tel que dans un « key signing party ») réalise un échange de clés avec tous les autres. Le lien suivant https://sparrow.ece.cmu.edu/group/pub/farb safeslinger mobicom2013.pdf est vers l'article qui décrit le procédé SafeSlinger.

### Association clé-attributs

Un utilisateur donné ayant caractérisé sa clé en lui associant des attributs, chaque attribut signifiant « cette clé appartient à celui qui présente l'attribut XXX » ; d'autres utilisateurs, ayant échangé leurs clés avec lui (comme décrit plus haut), peuvent confirmer ces attributs par génération et envoi (sécurisés) d'un certificat audit utilisateur donné : par exemple, pour confirmer la photo de l'utilisateur, d'autres utilisateurs lui envoient leurs signatures respectives du haché de cette photo. Un tel certificat est mémorisé au niveau du terminal qui le reçoit en tant que méta-attribut signifiant « cette clé appartient à celui qui présente l'attribut XXX reconnu par l'entité YYY », une entité représentant un individu (et pouvant confirmer un ou plusieurs attributs à la fois).

En outre, comme décrit dans la suite, une reconnaissance d'attribut(s) peut être effectuée *en présence* d'autres utilisateurs et générer un certificat (méta-attribut) signifiant « cette clé appartient à celui qui présente l'attribut XXX reconnu par YYY en présence de ZZZ ... ».

Ainsi, à chaque attribut peuvent être associés des méta-attributs indiquant leurs reconnaissances par d'autres entités.

Selon un aspect particulier (aussi revendiqué) de la présente invention mis en œuvre au moyen du système « Wallet Node » de l'invention et tirant parti de sa propriété d'intégrité d'exécution garantie (cf. plus loin « Wallet Node » où est décrit le mode de réalisation du système et procédé de transfert de messages entre entités et d'exécution apte à garantir l'intégrité du code exécutable des engagements), un tel certificat peut être obtenu, de manière sûre, selon un procédé de « transaction de confirmations croisées d'attributs », transaction atomique dans laquelle les participants à la transaction peuvent se confirmer des associations clé/attributs les uns les autres, chacun pouvant sélectivement (et facultativement) confirmer des attributs de types différents.

Ce procédé de transaction de confirmations croisées d'attributs et génération de méta-attributs est décrit ci-dessous sur un exemple de trois utilisateurs - A, B et C - participant à la transaction. Suite à l'échange de leurs clés respectives comme déjà décrit plus haut (typiquement dans une « Key Exchange Party »), le procédé comprend les étapes suivantes :
1. Définition des participants : les utilisateurs (A, B et C) démarrent chacun la transaction (chacun sur son terminal) en déclarant l'ensemble souhaité de leurs clés publiques respectives (ces clés représentant l'ensemble des participants à la transaction, en l'occurrence A, B et C), et ceci déclenche les envois mutuels de ces clés entre les participants qui peuvent les valider - cette première étape formant en soi une sous-transaction atomique qui se termine (commit) lorsqu'un ensemble d'utilisateurs tombent d'accord sur la question de savoir qui sont les participants à la transaction ;
2. Envoi mutuel automatique de certificats de méta-attributs générés automatiquement, signifiant :
   - pour A : « attribut "my-key : AAA" confirmé par B en présence de C » et « attribut "my-key : AAA" confirmé par C en présence de B », AAA étant la clé de A,
   - pour B et C : même que pour A mais avec les permutations appropriées ;
3. Confirmations d'attributs : en parallèle avec les deux premières étapes ci-dessus (et après), les utilisateurs génèrent des confirmations d'attributs les uns les autres ;
4. Génération des certificats de méta-attribut : après la première étape, les certificats de méta-attribut suivants sont générés pour les ajouts de confirmations d'attributs effectués à l'étape 3, en y insérant les adresses des utilisateurs « en présence » automatiquement, comme suit :
   - pour des attributs de A qui seraient confirmés par B, ces confirmations sont générées par B sous la forme « attribut XXX confirmé par B en présence de C », signées par B, transmises à C pour signature (signature d'office puisqu'il s'agit seulement de confirmer la confirmation de l'attribut, non pas par lui-même, mais par B en sa présence) et le ou les certificats ainsi formés sont retournés à A pour servir de méta-attributs associés à sa clé ;
   - pour des attributs de A qui seraient confirmés par C, même que ci-dessus mais en intervertissant B et C ;
   - et ainsi de suite pour des attributs de B confirmés par A ou C, et de C par A ou B, avec les permutations appropriées.
5. Clôture de la transaction (transaction commit) lorsque tous les participants en ont déclaré la fin (ou après écoulement d'un certain délai dès la génération de la dernière confirmation à l'étape 3 ou, à défaut, à partir de l'étape 2) et que tous les certificats produits ont été communiqués de part et d'autre.

On comprend que de tels attributs reconnus en présence d'autres utilisateurs (c'est-à-dire les attributs ayant des méta-attributs qui leurs sont associés) soient censés être plus fiables dans la mesure où les entités qu'ils référencent font partie de l'entourage de l'utilisateur. (On décrira plus loin leurs prises en compte dans le procédé de calcul de score de fiabilité.)

Il est à noter que le procédé décrit ci-dessus produit déjà des certificats à l'étape 2, même si aucun attribut (à part la clé, qui peut être vue come étant le premier attribut associé à la clé elle-même) n'ait été confirmé.

Dans un mode de réalisation préféré, des utilisateurs peuvent aussi être reconnus indirectement (transitivement) selon des règles fixées en commun : lorsque deux utilisateurs B et C qui ont été reconnus par un utilisateur A (avec « "my-key : BBB" confirmé par A » et « "my-key : CCC" confirmé par A »), reconnaissent à leur tour, conjointement, un utilisateur D (avec « "my-key : DDD" confirmé par B en présence de C » et « "my-key : DDD" confirmé par C en présence de B »), D est aussi considéré comme reconnu (plus exactement « implicitement reconnu ») par A. Les entités telles que B, C et D forment ainsi l'ensemble des entités que l'utilisateur A « connaît » (plus loin appelé l'ensemble « S »). Avantageusement, dans ce mode de réalisation, la reconnaissance de D par B et C peut être notifié par A qui peut alors lui-même le reconnaître.

Cette méthode simple, que l'on nommera ici « procédure d'identification réciproque forte » permet de former un réseau sécurisé d'entités identifiées en P2P, c'est-à-dire sans besoin d'un tiers de confiance tel qu'une autorité de certification. (A noter que le système de l'invention peut être mis en œuvre sur un réseau social existant par ailleurs, en en exploitant les connexions préexistantes.)

Toutefois, en ce qui concerne le risque de déni de signatures, la procédure d'identification réciproque forte n'empêche pas par exemple d'associer des mêmes attributs à deux clés distinctes, associations que l'on fait confirmer par d'autres entités dans le réseau, puis de dénier des engagements signés avec l'une des clés sans risquer d'invalider les engagements signés avec l'autre clé (un utilisateur peut détenir deux clés en pouvant se permettre d'en perdre une).

Un aspect de l'invention est de décourager un même utilisateur à utiliser plusieurs clés différentes en affectant à chaque association d'attribut à une clé un *score de fiabilité* de telle sorte qu'une multiplication des clés pour un même utilisateur conduise à une baisse de score de fiabilité.

### Score de fiabilité d'attribut

Dans le cadre de décentralisation que vise l'invention, ces scores ne sont pas absolus : il sont relatifs à l'entité tierce qui les calcule. Ils sont calculés en fonction des reconnaissances d'attributs (cf. certificat plus haut) effectuées dans l'environnement de l'entité tierce (l'entourage de l'utilisateur dans le réseau, typiquement - mais non exclusivement - ses connexions de degré 1 ou davantage).

Dans l'entourage d'un utilisateur, plus il y a d'entités qui reconnaissent (ce sont en fait les individus que ces entités représentent qui reconnaissent) des attributs caractérisant une entité donnée, plus cet utilisateur peut en principe se fier à cette entité - c'est-à-dire que plus l'utilisateur a de raisons de croire que la clé de cette entité donnée est légitimement associée à l'individu (ou au dispositif) distinct qu'elle représente. De plus, dans cette approche de validation collective, les entités qui en général reconnaissent des attributs ayant de meilleurs scores de fiabilité et qui ne sont pas associés à des engagements déniés sont dotées d'un poids plus fort (appelé *score autorité)* quant à leur capacité à valider des associations clé/attributs.

Ainsi le procédé comprend ici des comptages de reconnaissance d'associations attribut/clé par les entités de l'entourage de l'utilisateur, mais en évitant de prendre en compte des entités qui pourraient être introduites spécifiquement (sybil attack) dans le but d'augmenter des scores artificiellement (pour des entités qui serviraient à dénier des signatures).

Dans cette approche, les reconnaissances dont il est question sont de deux types :
1 Confirmation: une entité reconnait un attribut associé à la clé d'une autre entité (c'est-à-dire confirme l'association entre un attribut et une clé donnés) ;
2 Engagement : une entité dite fournisseur d'engagement émet un engagement envers une entité dite bénéficiaire d'engagement, chacune reconnaissant certains attributs de l'autre en les spécifiant comme prérequis, c'est-à-dire comme condition de l'engagement.

### Engagements

Dans une phase d'« acquisition de l'engagement » (précédant l'« exécution » de l'engagement), les interactions entre entités fournisseur et bénéficiaire d'engagement peuvent comprendre les étapes suivantes :
- l'entité bénéficiaire d'engagement reconnait des attributs de l'entité fournisseur d'engagement (dans le cadre de son acquisition de cet engagement, on en verra plus loin des exemples) en vue de l'obliger à respecter son engagement et
- l'entité fournisseur d'engagement peut à son tour reconnaître des attributs de l'entité bénéficiaire d'engagement de manière à ce que seules les entités ayant ces attributs puissent en bénéficier.

On notera ici que, dans le but de traiter les situations de déni d'engagement et leurs conséquences comme on le décrira plus loin, certaines informations relatives à un engagement donné existant entre une entité fournisseur donnée et une entité bénéficiaire donnée sont automatiquement propagées vers les entités bénéficiaires d'engagements « aval » (dont l'entité bénéficiaire donnée agit cette fois-ci comme fournisseur d'engagement). Ces informations comprennent notamment une identification de l'entité fournisseur donnée et du ou des attributs sur la base desquels l'entité bénéficiaire donnée a été reconnue.

L'identification d'une entité peut être sa clé (publique), une « adresse » qui peut être formée à partir (du haché) de sa clé ou peut être obtenue par encore une autre méthode. Dans la suite, on utilise les termes 'identification' et 'adresse' de manière interchangeable et avec la même signification.

Le procédé de l'invention pour déterminer des scores 'fiabilité' d'attributs et des scores 'autorité' d'entités (susmentionnés) sera décrit plus loin.

### Entité dispositif et entité responsable

Dans le cadre de la présente invention, pour une entité ayant une clé à laquelle sont associés des attributs, l'entité représente soit un *individu* qui en est l'utilisateur - et ayant des attributs tels qu'un nom ou un numéro de téléphone - soit un *dispositif -* ayant des attributs tels qu'une marque, un modèle et un numéro de série - ces attributs étant des caractéristiques de l'individu ou du dispositif en question. (A noter que lesdits dispositifs peuvent être en matériel ou logiciel.)

Pour que les entités représentant des dispositifs (« entité dispositif ») soient *sous la responsabilité* d'individus, à chacune de ces entités est associée une entité (et une seule) représentant un individu (humain) qui en est responsable, appelé « entité responsable humain », de manière à faire le lien entre les responsabilités d'entités mises en œuvre avec l'invention et les responsabilités dans leurs conséquences juridiques au niveau de la société **et éviter** les dérives de tels systèmes.

Chaque entité (représentant un individu ou un dispositif) est matérialisée par un mécanisme (dispositif matériel et/ou logiciel) appelé "Wallet Node", décrit plus loin, ayant le contrôle exclusif de sa clé, apte à effectuer des traitements informatiques et à en générer les preuves et apte aussi à générer des constats d'absence de traitements attendus de la part d'autres, dont l'entité en question est censée bénéficier. Avantageusement, les Wallet Nodes peuvent stocker des certificats, tels que des méta-attributs (reconnaissances d'attibuts), et un Wallet Node peut être créé dans le système en représentation d'une clé générée par une « entité externe » telle qu'une autorité gouvernementale par exemple.

A l'initialisation d'une entité « individu », une propriété « individu » lui est affectée. A noter que seules les entités individu peuvent reconnaître des attributs d'autres entités (puisque ce sont en fait les individus que ces entités représentent qui reconnaissent ces attributs). De même, seules les entités individus peuvent avoir des scores autorité.

A l'initialisation d'une entité « dispositif », une propriété « dispositif » lui est affectée et l'adresse d'une entité « individu » qui en est responsable (« entité responsable humain ») lui est également affectée sur réception de la signature de l'entité « individu » en question.

Outre l'entité responsable humain, à chaque entité peut être affectée une autre entité comme « entité responsable » (sur réception de sa signature), de type « individu » ou non. Les entités responsables peuvent ainsi former une chaîne transitive de responsabilité et dans l'autre sens, une même entité pouvant être responsable de plusieurs autres entités, avec une gestion de la chaîne telle qu'une entité aval ne puisse être responsable d'une entité amont qui en est directement ou indirectement responsable, les relations de responsabilité formant ainsi une structure d'arbre.

Une relation de responsabilité est mise en œuvre sous la forme d'un type d'engagement particulier, par lequel implicitement l'entité fournisseur d'engagement (c'est-à-dire l'entité responsable en question) apporte un poids d'engagement noté « Exposure Weight » (décrit plus loin) dans les engagements de l'entité bénéficiaire d'engagement, et ceci transitivement en suivant les propres relations de responsabilité de l'entité fournisseur engagement.

Ainsi, dans le but de traiter les situations de déni d'engagement et leurs conséquences comme mentionné plus haut, ladite propagation automatique vers les entités bénéficiaires d'engagements aval (propagation des adresses des entités fournisseurs et des attributs sur la base desquels les entités bénéficiaires ont été reconnues) sont également effectuées via les chaînes transitives de responsabilité.

### Déni d'engagement

Un exemple d'engagement est une autorisation d'accès, l'accès pouvant par exemple être le déverrouillage d'une porte de chambre en technologie NFC effectué par une serrure (entité « dispositif », fournisseur d'engagement) lors de l'établissement d'une communication en champ proche avec le smartphone (entité « individu », bénéficiaire de l'engagement) de la personne qui a loué la chambre. Cette communication peut comprendre l'envoi d'informations signées par l'entité bénéficiaire à l'entité fournisseur en vue de satisfaire l'engagement (commande d'ouverture de la porte, ci-après appelée « requête d'exécution ») et, dans l'autre sens, l'envoi d'informations signées par l'entité fournisseur à l'entité bénéficiaire (appelées « preuve d'exécution »), prouvant que l'engagement a été respecté (par exemple déclenché par la lecture d'un contacteur sécurisé dont l'ouverture témoigne de façon fiable de l'ouverture effective de la porte). Ces informations signées, pour éviter les fraudes, peuvent contenir le résultat de l'application d'une fonction déterminée à un challenge unique (nonce) envoyé par l'entité bénéficiaire au moment de la requête d'exécution.

Dans cet exemple précis, l'entité fournisseur d'engagement (« entité serrure ») a une entité responsable (« entité chambre», bénéficiaire par exemple d'engagements d'alimentation en eau et électricité pour cette chambre par encore d'autres entités) et ces deux entités ont une même « entité responsable humain » (représentant le propriétaire de la chambre). Au moment de l'achat de l'engagement (la location de la chambre en question), des informations incluant les adresses des responsables 'entité chambre' et 'entité responsable humain' sont communiquées à l'entité bénéficiaire d'engagement (avantageusement sans être divulguées aux utilisateurs, comme décrit plus loin), ceci dans le cadre de la propagation automatique vers les entités bénéficiaires d'engagements aval décrit plus haut permettant de traiter les situations de déni d'engagement et leurs conséquences.

Dans l'hypothèse où un montant d'unités de compte est associé à chaque engagement (ce montant représentant la valeur de l'exécution (ou de l'ensemble des exécutions) correspondant à l'engagement en question, en l'occurrence c'est le prix payé pour la location), en cas de défaut d'engagement (constat de preuve d'exécution non envoyée à temps en réponse à une requête d'exécution - en l'occurrence la preuve du déverrouillage de la serrure n'est pas envoyée à temps en réponse à une commande d'ouverture), un certain délai est accordé dans l'engagement à l'entité fournisseur d'engagement (en l'occurrence pour résoudre un dysfonctionnement technique éventuel qui empêcherait l'ouverture) et lorsqu'il est écoulé, si la preuve de l'exécution en question ou d'un dédommagement tel que prévu dans le contrat de l'engagement n'est pas envoyé par l'entité fournisseur (dédommagement qui en l'occurrence peut être par exemple la preuve d'une transaction de paiement ou la preuve de la mise à disposition d'une autre chambre en attendant), cette dernière ainsi que la chaîne de ses entités responsables, le cas échéant, passent à l'état « déni d'engagement » pour l'entité bénéficiaire d'engagement. En conséquence les associations entre la clé et les attributs reconnus dans l'engagement sont invalidées vis-à-vis des engagements « entrants » contractés par d'autres entités vers cette même entité cette fois-ci en tant que bénéficiaire d'engagements. Suite à la notification de ces dernières (cf. la description qui suit), en guise de sanction, les engagements entrants qui spécifiaient ces attributs (s'il n'y a pas incohérence d'attributs, voir plus loin la définition d'« attributs compatibles ») sont gelés pendant une phase, dite « d'arbitrage » aussi prévue dans l'engagement. Cette sanction de gel des engagements entrants est aussi appliquée aux entités de la chaîne amont des responsables, à concurrence du montant de l'engagement en question (cf. l'exemple ci-après).

Par « un délai est prévu dans l'engagement, pour la réception de la preuve en question par l'entité bénéficiaire », on entend que le contrat dudit engagement - contrat exécutable, comme on le décrira plus loin - qui est un programme d'ordinateur tournant dans cette entité bénéficiaire est en attente, pendant ce délai, de la réception de la preuve en question.

Plus précisément, les délais qu'un engagement prévoit comprennent de préférence :
1. un premier délai (court) pour recevoir l'exécution de l'engagement (en l'occurrence, l'ouverture de la porte),
2. un deuxième délai, pour corriger le défaut d'engagement ou dédommager l'entité bénéficiaire spontanément comme convenu dans l'engagement (qui peut inclure plusieurs options dont typiquement un engagement par l'entité responsable humain garanti par un tiers de confiance) et
3. un troisième délai (délai d'arbitrage), typiquement pour une décision (de justice ou d'arbitrage) par un signataire prévu dans l'engagement (l'« arbitre »), décision d'attribution ou non du défaut d'engagement à un individu identifié censé être représenté par l'entité responsable humain et décision de la conséquence de cette attribution le cas échéant.

A noter que pour chaque envoi de message (telle qu'une requête ou une preuve d'exécution, un nonce ou un haché de nonce en retour, une transaction de dédommagement, une reconnaissance de dette, ou encore une décision envoyée par un arbitre), le message est signé et le système de l'invention (cf. Wallet Node) prévoit un *accusé de réception* dans un certain délai, à défaut duquel (ou dans tous les cas) le message en question est enregistré dans une structure de données immuable (telle qu'une blockchain, partagée par les parties ou chez des tiers de confiance) devant être consultée, ce qui permet d'en prouver l'envoi ou d'en constater le non envoi (et générer ainsi la preuve de l'absence d'un message attendu). Il est à noter qu'avantageusement l'utilisation d'une telle structure de données immuable peut être restreinte aux cas (exceptionnels) de non réception d'accusé de réception, et qu'avantageusement encore, grâce à la mise en œuvre des Wallet Nodes, comme déjà évoqué, au lieu d'une blockchain on peut utiliser un simple registre (qui peut être distribué ou pas, stockant les Wallet Message).

Ainsi, les étapes d'exécution d'un engagement sont (potentiellement) les suivants :
1. Une requête d'exécution (demande d'accès) est envoyée par l'entité bénéficiaire à l'entité fournisseur. Cette dernière a un 'premier délai' pour exécuter l'engagement (donner l'accès). Cette étape peut typiquement comprendre des sous-étapes supplémentaires, telles que la génération et l'envoi par l'entité fournisseur d'un premier nonce à l'entité bénéficiaire, qui doit générer un nouveau nonce et le lui retourner avec le haché du premier, ces deux nonces en combinaison devant ensuite être utilisés dans la génération de la preuve d'exécution par un dispositif sécurisé au niveau de l'entité fournisseur d'engagement.
2. Cas de non-exécution : sur constat de non-envoi de preuve d'exécution, l'entité bénéficiaire génère et envoie à l'entité fournisseur une preuve de défaut d'engagement.
3. Cas de déni d'engagement : après écoulement d'un délai prévu dans l'engagement (deuxième délai), si la preuve d'exécution (dédommagement) comme prévu par l'engagement ne lui est pas envoyée, l'entité bénéficiaire d'engagement
   - génère le constat de *déni d'engagement* (c'est-à-dire le constat de l'absence de la preuve d'exécution/dédommagement) ;
   - lance la procédure d'arbitrage définie dans le contrat de l'engagement (typiquement la procédure d'arbitrage, lancée par le contrat exécutable de l'engagement, comprend la notification d'une entité « arbitre » accepté par les parties et l'attente de la réception de la décision pour clore la procédure et passer à l'étape suivante - l'étape 4. ci-dessous) ;
   - détermine quels sont les engagements entrants à geler - ce sont, le cas échéant, les engagements dont l'entité fournisseur est bénéficiaire et dont les attributs reconnus pour cette dernière sont compatibles avec les attributs reconnus pour cette dernière dans l'engagement défaillant ;

Par « sont compatibles » on entend « ont une intersection et ne présentent pas d'incohérence ». Les attributs comprennent des « attributs forts » désignant de façon unique des entités et/ou des « attributs faibles » désignant de façon potentiellement non unique des entités, et la détection d'incohérence comprend la détection d'un attribut fort contradictoire (avec les attributs reconnus dans l'engagement défaillant) ou d'un ensemble d'attributs différents pour des types d'attribut donnés.
- envoie, aux entités fournisseur desdits engagements entrants à geler, le constat de déni d'engagement et la notification de gel de ces engagements ;
- cette étape est renouvelée, à concurrence du montant de l'engagement en cause, en remontant à l'entité responsable puis, le cas échéant, d'une entité responsable à l'autre (toujours dans la mesure où les attributs reconnus dans l'engagement suivant sont compatibles avec les attributs de l'engagement courant traité) ;
- avantageusement, le procédé peut prévoir de notifier les entités bénéficiaires de l'entité défaillante du changement d'état de ce dernier.
4. Sur réception de la part d'un « arbitre » prévu dans l'engagement, d'une décision positive (signifiant en substance que les conséquences du défaut d'engagement ont pu être reportées sur un humain et que le blocage des engagements entrants doit être levé), lesdits gels sont défaits, et au contraire en cas de réception d'une décision négative les engagements en questions sont définitivement invalidés.

A noter que le déni d'engagement dont il est question au point 3 n'est en réalité qu'une présomption de déni d'engagement qui est confirmée ou infirmée au point 4.

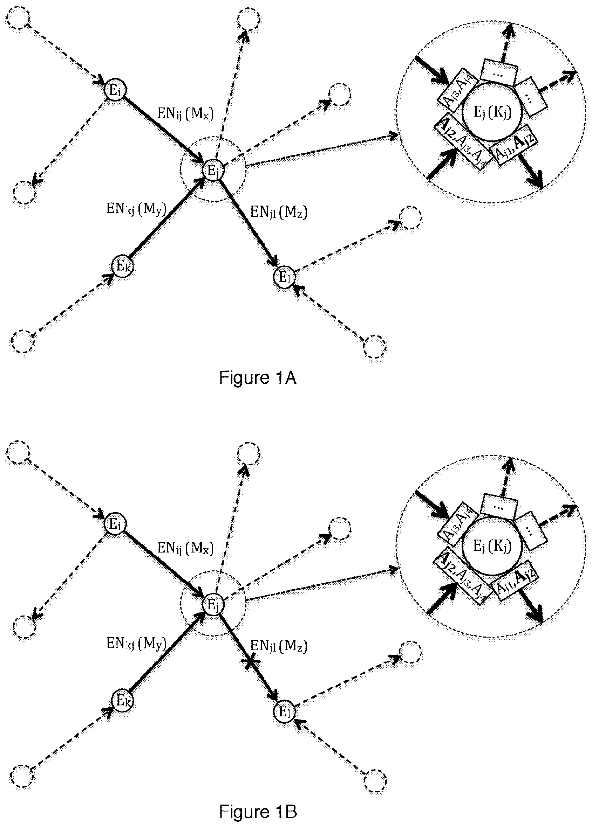

Ainsi par exemple, en référence à la Figure 1A, une entité Eⱼ a un engagement ENⱼ₁ en tant que fournisseur vers une entité E₁ en tant que bénéficiaire, pour un montant M_{z}, cet engagement étant un engagement d'accès. Le détail au niveau de l'entité Eⱼ (à droite dans la figure) montre que, en ce qui concerne l'engagement ENⱼ₁, E₁ reconnaît les attributs Aⱼ₁,Aⱼ₂ de Eⱼ et que pour les engagements entrants, à savoir :
ENᵢⱼ (d'un montant Mₓ) de Eᵢ et
ENₖⱼ (d'un montant M_{y}) de Eₖ,
les attributs reconnus de Eⱼ sont respectivement Aⱼ₃,Aⱼ₄ et Aⱼ₂,Aⱼ₃,Aⱼ₄.

Le détail au niveau de l'entité Eⱼ montre aussi que Aⱼ₂ est un attribut fort (en gras dans la figure).

Si l'accès dans le cadre d'une transaction d'accès selon l'engagement ENⱼ₁, dont E₁ est acteur, n'aboutit pas (premier délai écoulé), l'entité E₁ en génère automatiquement la preuve, la notifie à Eⱼ et, dans un premier temps, un certain délai (deuxième délai, aussi prévu dans le contrat de l'engagement) lui est accordé, par exemple pour résoudre des dysfonctionnements techniques aboutissant à l'impossibilité d'accès.

Après l'écoulement de ce délai, si le défaut de l'engagement ENⱼ₁ n'est pas corrigé (en cas de non-dédommagement conformément à l'une des options le cas échéant prévues dans le contrat de l'engagement), le déni de l'engagement ENⱼ₁ est constaté par l'entité E₁, et en conséquence l'association entre les attributs Aⱼ₁,Aⱼ₂ et la clé Kⱼ de l'entité Eⱼ (Figure 1B) est provisoirement invalidée vis-à-vis des engagements entrants ENᵢⱼ et ENₖⱼ.

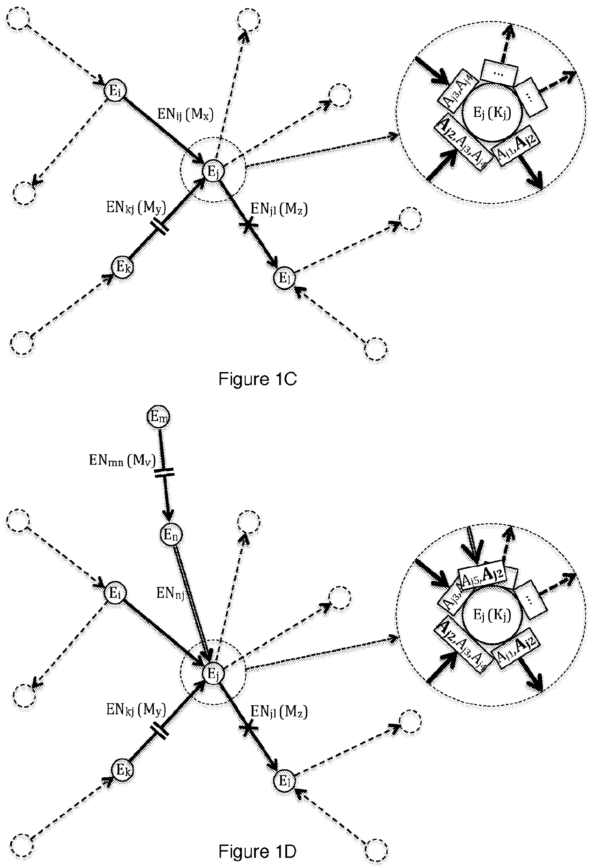

E₁ notifie alors l'arbitre prévu dans le contrat de l'engagement du déni de l'engagement ENⱼ₁ et compare les attributs de Eⱼ reconnus dans les engagements entrants avec ceux reconnus dans l'engagement défaillant ENⱼ₁. Il en résulte que seul ENₖⱼ présente une intersection d'attributs et cette intersection ne comprend que l'attribut Aⱼ₂. S'agissant d'un attribut fort, E₁ notifie Eₖ de *geler* son engagement ENₖⱼ dont l'entité Eⱼ est bénéficiaire (cf. Figure 1C).

Cette étape se propage vers les responsables de Eⱼ à l'amont (par les sous-étapes ci-dessous) jusqu'à que le total des montants de l'ensemble des engagements ainsi gelés atteigne (ou dépasse) M_{z}:
1. Le total des montants de l'ensemble des engagements déjà gelés est comparé avec M_{z}. Comme M_{y} est inférieur à M_{z}, le procédé remonte vers le responsable (Eⱼ peut représenter la serrure, Eₗ le locataire, Eₙ le loueur de la chambre et Eₘ le fournisseur d'électricité par exemple).
2. Eₗ avait été notifié du responsable Eₙ de Eⱼ. Ce dernier reconnait (sur l'engagement de responsabilité ENₙⱼ) suffisamment d'attributs reconnus sur l'engagement défaillant ENⱼ₁ (en l'occurrence, il s'agit de Aⱼ₂, qui suffit en soi puisque c'est un attribut fort) et dont les autres attributs reconnus (en l'occurrence Aⱼ₅) ne présentent pas d'incohérence avec ces derniers.
3. Eₙ bénéficie d'un engagement ENₘₙ (de Eₘ, d'un montant Mᵥ) reconnaissant une partie suffisante de ses attributs qui sont reconnus par Eⱼ sur ENₙⱼ, et sans présenter d'incohérence.
4. En conséquence, ENₘₙ est également gelé (Figure 1D) et du fait que M_{y}+Mᵥ atteint (ou est supérieur à) M_{z}, cette étape se termine.

Ultérieurement, sur notification d'une décision positive de l'arbitre ces gels sont annulés ou, si la décision est négative, ces engagements sont invalidés définitivement.

A noter que la réception, par une entité donnée, d'une notification de déni d'engagement par rapport à des attributs donnés entraîne la notification, par cette entité donnée, de l'information de ce déni vers les entités fournisseurs d'engagement (sur des attributs compatibles) envers l'entité accusé de ce déni, dont les scores autorité sont alors amoindris en réaction à la réception de cette notification.

Avantageusement le procédé de l'invention établit un poids d'engagement appelé *« Exposure Weight »* pour chaque entité en fonction des montants des engagements pour lesquels cette entité et ses responsables (compatibles vis-à-vis de ses attributs, comme décrit ci-avant) sont bénéficiaires d'engagements. Ainsi, dans l'exemple, *l'Exposure Weight* que présente Eⱼ vis-à-vis de Eₗ est égal à M_{y}+Mᵥ.

### Détermination de scores

Le procédé de calcul des scores décrit ci-après prend en compte les *Exposure Weights* décrits ci-dessus et exploite le fait qu'au niveau de chaque entité donnée sont, le cas échéant, enregistrées :
- les adresses des entités qui ont avec cette entité donnée un engagement (un lien orienté courant de reconnaissance d'attribut à un temps donné) en tant que fournisseur ou bénéficiaire d'engagement (ou encore en tant que destinataire de transfert d'engagement, voir plus loin), ainsi que
- les adresses des entités ayant simplement confirmé les attributs de cette entité donnée (dont des attributs sont reconnus par cette entité donnée).

Le procédé démarre avec l'entité représentant l'utilisateur lui-même ainsi qu'un ensemble d'entités que l'utilisateur « connaît » (par exemple par la procédure d'identification réciproque forte décrite plus haut) et dont il a confirmé des attributs. Cet ensemble est ici appelé « S ».

Comme déjà dit, dans l'entourage d'un utilisateur (déterminé en partant de S), plus il y a d'entités qui reconnaissent des attributs associés à une entité donnée, plus cet utilisateur peut en principe se fier à cette entité.

De plus, les entités qui en général reconnaissent des attributs ayant de meilleurs scores de fiabilité (et qui ne sont pas associés à des engagements déniés) sont dotées d'un poids plus fort (appelé score autorité) quant à leur capacité à valider des associations clé/attributs.

A partir de S, on va construire l'ensemble "S_" des entités qui, en tant que fournisseur d'engagement, ont un engagement ayant des attributs compatibles envers (au moins) une entité de S. Ainsi le signe "_" indique que l'on construit un ensemble d'entités "amont".

Par compatible, on entend compatible avec les attributs reconnus à l'étape précédente, ce terme « compatible » ayant le sens donné plus haut. Ainsi par exemple, si pour une entité donnée de S certains attributs ont été reconnus par (l'entité représentant) l'utilisateur, une entité de S - est une entité, fournisseur d'engagement envers cette entité donnée, ayant reconnu des attributs compatibles avec ceux reconnus par l'utilisateur.

Ensuite, à partir de l'ensemble construit S_, on construit l'ensemble "S_+" des entités envers lesquelles au moins une entité de S_ a, en tant que fournisseur d'engagement, un engagement ayant des attributs compatibles. Ainsi le signe "₊" indique que, à partir de S_, l'on construit un ensemble d'entités "aval".

De même, S_₊_ est l'ensemble des entités qui, en tant que fournisseur d'engagement, ont un engagement ayant des attributs compatibles envers (au moins) une entité de S_₊. On a réutilisé le signe _ pour construire un ensemble d'entités aval incluant S_.

Et ainsi de suite, on peut construire des ensembles de plus en plus grands, comme des poupées russes.

Ainsi, à partir de S, les ensembles constituant l'entourage de l'utilisateur sont créés comme défini ci-dessous :
- S_ (ou S_₊_, S₊_, S_₊_₊_, S_₊₊_, S₊_₊_, S_₊₊_, etc.) : c'est l'ensemble des entités qui, en tant que fournisseur d'engagement, ont un engagement ayant des attributs compatibles envers (au moins) une entité de S (resp. S_₊, S₊_, S_₊_₊, S_₊₊_, S₊__₊ (voir ci-dessous) et ainsi de suite selon l'étendue de l'entourage souhaitée) ;
- S_₊ (ou S_₊_₊, S₊__₊, S_₊_₊_₊, S_₊₊__₊, S₊__₊_₊, etc.) : ce sont les entités envers lesquelles au moins une entité de S_ (resp. S_₊_, S₊___, S_₊_₊_, S_₊₊__, S₊__₊_, etc. - voir plus loin) a, en tant que fournisseur d'engagement, un engagement ayant des attributs compatibles ;
- (S_₊_ est l'ensemble des entités qui, en tant que fournisseur d'engagement, ont un engagement ayant des attributs compatibles envers (au moins) une entité de S_+)
- S+ (ou S₊_₊, S_₊₊, S₊_₊_₊, S₊__₊₊, S_₊₊_₊, etc.) : ce sont les entités envers lesquelles au moins une entité de S (resp. S₊_, S_₊, S₊_₊_, S₊__₊, S_₊₊_ - voir plus loin - et ainsi de suite selon l'étendue de l'entourage souhaitée) a un engagement ayant des attributs compatibles ;
- S₊_ (ou S₊_₊_, S_₊₊_, S₊_₊_₊_, S₊__₊₊_, S_₊₊_₊_, etc.) : les entités qui ont un engagement ayant des attributs compatibles envers (au moins) une entité de S+ (resp. S₊_₊, S_₊₊, S₊_₊_₊, S₊_₊₊, S_₊₊_₊, etc.)

A noter que S_₊ inclut S, que S_₊_ inclut S_, que S₊_₊ inclut S+, etc.

Des « scores fiabilité » sont calculés (comme décrit ci-dessous) pour les attributs des entités de S_₊ (ou S_₊_₊, etc.) ainsi que pour les attributs des entités de S+ (ou S₊_₊, etc.).

Des « scores autorité » sont calculés (comme décrit ci-dessous) pour les entités de S_ (ou S_₊_, etc.) ainsi que pour les entités de S₊_ (ou S₊_₊_, etc.).

A noter qu'une même entité peut faire partie de plusieurs de ces ensembles, par exemple de S_ et S_₊, et avoir ainsi à la fois les scores autorité et fiabilité.

Le procédé de calcul des scores est itératif et à chaque itération, les scores sont normalisés. Au préalable, la taille de l'étendue de l'entourage est fixée et les ensembles en question sont déterminés. Ensuite, les étapes sont les suivantes :

### 1. Initialisation

Les *scores fiabilité* des attributs des éléments de S sont initialisés à 1, puis normalisés (divisés par leur total au niveau de chaque élément, de façon à ce que leur nouveau total soit égal à 1, puis re-divisés par leur total au niveau de l'ensemble S, de façon à ce que le nouveau total pour S soit égal à 1). Les attributs des autres entités de S_₊ (ou S_₊_₊, etc. selon l'étendue de l'entourage qui a été choisie) ont initialement un score fiabilité nul - comme énoncé ci-dessous, leurs scores fiabilité respectifs vont être calculés sur la base des éléments de S_ (ou S_₊_ etc.) itérativement.

### 2. Calcul des scores autorité

Pour chaque élément donné de S_ (ou S_₊_ etc.), le *score autorité* est (re)calculé en sommant les scores fiabilité des attributs reconnus par les engagements (envers les éléments de S_+, resp. S_₊_₊, etc.) dont cet élément donné est fournisseur d'engagement. Les scores autorité sont normalisés (divisés par leur total de façon à ce que leur total soit égal à 1).

Avantageusement, ce score autorité est pondéré par la valeur de l'engagement en question et par le poids des engagements envers elle-même *(Exposure Weight).* Il est aussi normalisé.

### 3. Calcul des scores fiabilité

Pour chaque attribut donné de chaque entité de S_+ (ou S_₊_₊, etc.), le *score fiabilité* est (re)calculé en prenant le rapport entre :
- la somme des scores autorités des entités de S_ (resp. S_₊_, etc.) qui sont fournisseur d'un engagement reconnaissant cet attribut donné tout en étant fournisseur d'engagement pour au moins un élément de S et
- la somme des scores autorités des entités de S_ (resp. S_₊_, etc.) qui sont fournisseur d'un engagement reconnaissant cet attribut donné *ou* qui sont fournisseur d'engagement pour au moins un élément de S.

Avantageusement, les méta-attributs desdits attributs de S_₊ (ou S_₊_₊, etc.) sont susceptibles de faire augmenter leurs scores fiabilité en fonction des scores autorité des entités qui figurent dans ces méta-attributs. Plus précisément, si un méta-attribut d'un attribut XXX reconnu dans un engagement entrant courant considéré signifiant « cette clé appartient à celui qui présente l'attribut XXX reconnu par YYY en présence de ZZZ ... » référence :
- une entité YYY appartenant à l'ensemble des entités considérées S_ (resp. S_₊_, etc.) mais n'étant pas fournisseur d'engagement envers l'entité courante de S_₊ (ou S_₊_₊, etc.),
   ∘ alors c'est comme si, dans cet ensemble il y avait un engagement entrant de plus qui reconnaissait XXX et donc dans les comptages on ajoute son score autorité ;
- une entité (en tant que « en présence de ») ZZZ,
   ∘ alors le score autorité de l'entité YYY pris en compte a plus de poids (par exemple +10%).

Le résultat pour chaque attribut donné est normalisé (divisés par le total des scores fiabilité au niveau de chaque élément, de façon à ce que leur nouveau total soit égal à 1 au niveau de chaque élément, puis re-divisé par leur total au niveau de l'ensemble S, de façon à ce que le nouveau total pour S soit égal à 1).

### 4. Itération

Les étapes 2 et 3 sont itérées tant que les scores n'ont pas convergé (en d'autres termes, les itérations s'arrêtent lorsque les nouveaux scores fiabilité obtenus sont suffisamment proches des précédentes avec un écart donné. En général moins de 10 itérations suffisent).

Des optimisations peuvent être apportées, notamment en tenant compte des minimum et maximum des scores autorités.

Les mêmes principes peuvent avantageusement être transposés à S+ (S₊_₊, S_₊₊, S₊_₊_₊, S₊__₊₊, S_₊₊_₊, etc.). Ceci donne alors les étapes suivantes :

### 5. Calcul des scores fiabilité

Pour chaque attribut donné de chaque entité de S+ (ou S₊_₊, etc.), le *score fiabilité* est (re)calculé en prenant le rapport entre :
- la somme des scores autorités des entités de S (resp. S₊_, etc.) qui sont fournisseur d'un engagement reconnaissant cet attribut donné tout en étant fournisseur d'engagement pour au moins un élément de S et
- la somme des scores autorités des entités de S (resp. S_+, etc.) qui sont fournisseur d'un engagement reconnaissant cet attribut donné *ou* qui sont fournisseur d'engagement pour au moins un élément de S.

Ici encore, avantageusement, les méta-attributs des attributs S+ (ou S₊_₊, etc.) sont susceptibles de faire augmenter leurs scores fiabilité en fonction des scores autorité des entités qui figurent dans ces méta-attributs, comme décrit précédemment (remplacer S_ (resp. S_₊_, etc.) par S (resp. S₊_, etc.)).

Le résultat pour chaque attribut donné est normalisé (divisés par le total des scores fiabilité au niveau de chaque élément, de façon à ce que leur nouveau total soit égal à 1 au niveau de chaque élément, puis re-divisé par leur total au niveau de l'ensemble S, de façon à ce que le nouveau total pour S soit égal à 1).

### 6. Calcul des scores autorité

Pour chaque élément donné de S (ou S₊_ etc.), le *score autorité* est (re)calculé en sommant les scores fiabilité des attributs reconnus par les engagements (envers les éléments de S+, resp. S₊_₊, etc.) dont cet élément donné est fournisseur d'engagement. Les scores autorité sont normalisés (divisés par leur total de façon à ce que leur total soit égal à 1). Avantageusement, ce score autorité est pondéré par la valeur de l'engagement en question et par le poids des engagements envers elle-même (Exposure Weight). Il est aussi normalisé.

### 7. Itération

Les étapes 5 et 6 sont itérées tant que les scores n'ont pas convergé. (En général moins de 10 itérations suffisent).

Les deux sens (vers S_ vs. vers S+) peuvent être alternées de sorte que le sens vers S_ tire parti d'ensembles tels que S₊__, S_₊₊__, etc. et que le sens vers S+ tire parti d'ensembles tels que S_₊₊, S₊__₊₊, etc.

Avantageusement, plutôt que (ou en plus de) ne prendre en compte que des engagements, le procédé de détermination de scores fiabilité et autorité peut prendre en compte
- pour S_ (ou S_₊_, S₊_, etc.) des entités dont des attributs sont reconnus par au moins une entité de S (resp. S_ ₊, S₊, etc.) et réciproquement (exigence de reconnaissances bidirectionnelles, afin d'éviter les entités non désirées / sybil attack), et
- dans l'autre sens, pour S_₊, S_₊_₊, S₊, etc., des entités dont des attributs sont reconnus (resp. par une entité de S_, S_₊_, S, etc.) mais sans nécessiter une reconnaissance bidirectionnelle.

En plus de la prise en compte de méta-attributs comme décrit ci-dessus (pour augmenter les scores fiabilité en fonction des scores autorité des entités qui figurent dans ces méta-attributs), avantageusement un « coefficient de cohérence » des attributs est appliqué pour augmenter les scores de fiabilité des attributs dits « cohérents ». Ce coefficient est fonction du rapport entre :
- le nombre des engagements entrants qui reconnaissent l'attribut en question *et* reconnaissent aussi d'autres attributs de l'entité en question (pondéré par le nombre de ces derniers) et
- le nombre total des engagements entrants qui reconnaissent des attributs de l'entité en question.

### Certification de produits dans chaîne logistique

Une entité peut générer des identifiants de produits sous la forme de « tag » (défini ci-dessous), pouvant notamment servir dans des applications décentralisées de Supply Chain Management. Le même procédé peut aussi servir à générer des identifiants de documents (fichier ou groupe de fichiers, programmes, etc.) ou comme preuve de première création d'une marque, d'un nom de domaine, etc.

Tag : fichier d'identification univoque contenant un ou plusieurs « certificat de provenance » d'un produit matériel ou d'une ressource non matérielle (à un tag ne correspond qu'un seul produit ou ressource non matérielle), un certificat de provenance existant ne pouvant être modifié ou supprimé, mais d'autres certificats de provenance pouvant être ajoutés dans le tag.

Certificat de provenance d'un produit ou document (numérique) : signature, par une entité apte à le certifier, d'un ensemble d'attributs le caractérisant ; par exemple, un certificat de provenance peut certifier une origine, une certaine transformation dans une chaine de transformations, etc.

Usages d'un tag :
- Le tag est dans une étiquette associée à un produit matériel, permettant de l'identifier et d'en détecter les reproductions illicites (considérées come imitation, contrefaçon, etc.). Typiquement, une étiquette (tag physique) est attachée au produit et est munie d'un code lisible par machine tel que QR-Code, RFID, etc. dérivé du contenu du tag.
- Le tag est une méta-donnée associée à une ressource non matérielle créée telle qu'un document, un fichier, un groupe de fichiers, etc., permettant de l'identifier, d'en détecter les reproductions ou usages illicites, etc. Typiquement, le tag peut être un « manifest file » (connu dans le domaine du logiciel).
- Le tag est associée à une ressource non matérielle telle qu'une attestation cadastrale, une marque ou un nom de domaine, comprend un horodatage (timestamp) lui donnant une priorité, et est inclus dans un registre publiquement accessible, de préférence mis en œuvre en une table de hachage distribué (DHT, « Distributed Hash Table »).

Dans la suite, par « instance de produit » on entend instance d'un produit matériel ou d'une ressource non matérielle.

Selon le procédé de l'invention, le tag (numérique) d'une instance de produit est généré (de préférence lors de sa création) par une entité dénommée son « Owner Wallet Node » (OWN) dont l'adresse est incluse dans le contenu du tag, et peut ensuite être transféré d'un OWN à un autre. Lorsqu'il est transféré, le transférant ne l'a plus, ce qui implique qu'à tout moment un tag n'a qu'un seul Wallet Node de type OWN : cet effacement du tag chez le transférant est réalisé de façon fiable du fait de la garantie d'intégrité d'exécution d'un « Wallet Program » par une entité « Wallet Node » (voir description des Wallet Nodes et des Wallet Programs dans la suite), avec une mise en œuvre possible dans une architecture en P2P et sans nécessiter le recours à une chaîne de sécurité unique et partagée de type « Blockchain ».

Initialement, le OWN qui a généré le tag le contrôle d'office (c'est une propriété associée à une entité). Ensuite, une autre entité, peut demander de le contrôler. Ce transfert de contrôle s'effectue sur une base « Premier demandeur - premier servi. L'entité qui contrôle un tag donné à un instant donné est dénommée le « Viewer Wallet Node » (VWN) de ce tag (initialement, l'entité OWN est en même temps son entité VWN). Puis un autre entité peut faire une requête d'en prendre le contrôle à son tour et devenir le nouveau VWN de ce tag donné, et ainsi de suite, de façon à ce qu'il n'y ait toujours qu'un seul VWN qui contrôle un tag donné. L'intégrité d'exécution des entités garantit que, à l'exception du OWN initial qui a généré le tag, chaque entité qui contrôle un tag l'a reçu d'une entité (le VWN précédant) qui n'a plus ce contrôle. Ainsi, le tag vu par une entité ne peut pas être un doublon d'un tag vu précédemment : c'est plutôt le même tag qui, typiquement, s'est déplacé dans sa chaîne de transport et/ou transformation, d'un VWN à un autre.

Afin de pouvoir retrouver le VWN courant d'un tag donné, l'adresse du VWN courant du tag est maintenue (mémorisée et tenue à jour) par le OWN courant du tag, dont la propre adresse peut être retrouvée par navigation à partir du OWN initial qui a généré le tag (et dont la propre adresse rappelons-le est incluse dans le contenu du tag). L'intégrité d'exécution des entités OWN garantit le fait de pouvoir retrouver le VWN courant d'un tag donné.

La validité d'une instance de produit associée à un tag donné est obtenue en effectuant une requête au VWN courant de ce tag, qui répond par un message dont le contenu en clair peut être « ce tag donné est sous mon contrôle ; il a été généré par l'entité XXX ; j'en ai moi même reçu le contrôle la part de l'entité YYY et, depuis, aucune entité ne me l'a encore demandé », indiquant ainsi qu'il a ce tag sous son contrôle exclusif jusqu'à réception d'une requête d'un VWN suivant, acceptée, et que, comme déjà dit, le système garantit qu'aucune autre entité (exécutant le même « Wallet Program » de VWN) ne va, pendant qu'il a ce tag sous son contrôle, valider une instance de produit pour ce même tag.

Il en découle que, dans la mesure où un tag identifie (de manière univoque) une instance de produit, toutes les instances de produit - auxquels un même tag est associé - validées une à la fois dans le temps, par une entité VWN, sont identifiées comme étant une seule et même instance de produit (typiquement dans une chaîne de transformation, une chaîne logistique, etc.).

Autrement dit, en utilisant ce procédé pour valider les instances de produit, à un identifiant donné (sous la forme d'un tag) n'est censée correspondre dans le monde réel qu'une seule instance de produit (« officielle », « authentique », « certifiée ») à la fois, bien qu'il puisse évoluer d'un contrôle ou validation à un autre.

Ce procédé trouve des applications notamment dans le Supply Chain Management, où un produit doit être audité dans différents relais de sa chaîne logistique en utilisant un équipement certificateur incluant un VWN, son tag incluant de nouveaux certificats résultant de ces audits, sa traçabilité restant garantie, ce produit pouvant être composite et résulter d'assemblages ou compositions de plusieurs telles instances de produit - ou encore pour vérifier qu'un seule instance d'un logiciel est utilisée à un moment donné ou qu'un document est valide - sans qu'un quelconque dispositif central ne soit utilisé : à la suite de la création de l'instance en question, les entités effectuant ces audit ou vérifications ne partagent pas forcément une structure commune ni ne nécessitent le recours à une chaîne de sécurité unique et partagée de type « Blockchain ».

Dans le cas où une étape de transformation dans la chaîne amène, au niveau d'un équipement certificateur, à modifier les caractéristiques d'un produit ou le fait qu'un ensemble de produits est transformé en un autre ensemble de produits, cet équipement certificateur peut être habilité à conformément substituer les tags physiques correspondants (selon les règles prévues dans le Wallet Program exécuté).

Dans une mise en œuvre particulière de l'invention pour certains types de produit, chaque instance de produit contient ou comporte sa propre entité physique OWN (mise en œuvre en tant que Wallet Node selon le système de l'invention) et le transfert de OWN devient alors non nécessaire lors des transferts de propriété.

Dans le cas où, en bout de chaîne logistique, une instance de produit associée à un tag donné est remplacée illicitement par une autre (par exemple de valeur ou de qualité moindre), l'instance en question peut être auditée pour constater ce remplacement illicite par rapport aux attributs certifiés qui figurent dans le tag (telles qu'une photo), et l'entité qui l'a fournie peut être automatiquement mise en défaut d'engagement selon le procédé présenté à la section « Engagements ».

Le troisième usage évoqué plus haut (de requêtes à un registre stockant des tags ou des certificats horodatés) indique que l'on peut retrouver les données sécurisées des tags, notamment leurs priorités respectives, à partir d'un registre où ils sont stockés. Avantageusement, avec la garantie d'intégrité d'exécution des Wallet Programs comme décit plus loin, de telles priorités obtenues par horodatage sont garanties authentiques (les signatures des horodatages en question étant effectuées par des entités OWN qui sont des Wallet Nodes aptes à synchroniser leurs horloges respectives de manière sécurisée) : le procédé ne nécessite pas le recours à une chaîne de sécurité unique et partagée de type « Blockchain » pour les garantir. A noter que ledit registre peut être mis en œuvre de manière centralisée, partiellement décentralisé ou distribuée (en une DHT, « Distributed Hash Table »).

D'autres usages incluent :
- l'autorisation de reproduire un tag un nombre de fois limité : un VWN courant ayant le contrôle d'un tag donné accepte de passer son contrôle, non pas à un seul, mais à plusieurs VWN suivants, tant que le nombre total de tags en circulation ne dépasse pas un seuil donné,
- lier aux tags des propriétés générées automatiquement telles que de géolocalisation, le VWN en question validant le tag selon des règles qui lui sont associées.

On va maintenant décrite des procédés pour s'assurer qu'un tag physique (typiquement un circuit électronique RFID) mémorisant les données d'un tag numérique décrit plus haut et apposé sur un produit physique n'a pas été, involontairement ou frauduleusement, déplacé vers un autre produit (par exemple un produit de valeur inférieure ou de qualité inférieure).

Selon un premier mode, un VWN ayant pour rôle d'apposer un tel tag physique et ayant une capacité de certification peut faire partie d'une équipement capable de façon automatisée de prendre une photographie d'une région du produit comportant le tag physique et d'encoder cette photographie (haché, algorithme de génération d'une chaîne de caractères unique associée à la photo, vignette de la photo ou photo telle que) dans le tag lui-même.

Par la suite, pour vérifier que la tag physique n'a pas été déplacé vers un autre produit, la prise d'une photo, par exemple par l'acheteur du produit en question, peut être effectuée, cette photo étant alors sujette au même encodage, et cet encodage étant comparé avec le contenu du tag, pour certifier (ou simplement vérifier) que le tag est bien situé sur son produit d'origine. Avantageusement, l'équipement utilisé pour prendre cette photo est doté de moyens de positionnement lui permettant de prendre la photo dans la même position (avec un écart dépendant de la mise en œuvre en question) que celle à laquelle la photo ayant donné lieu à l'encodage en question était prise.

Cette approche convient particulièrement bien à des produits d'aspects suffisamment variables pour que chaque encodage de photo soit unique (par exemple produits alimentaires).

Selon un deuxième mode, l'équipement effectue un scan moléculaire du produit, par exemple avec une technologie de spectroscopie en infrarouge proche (du type du scanner moléculaire fabriqué par la société Consumer Physics, Inc., Israël), et écrit dans le tag des informations représentatives de la composition moléculaire du produit.

Par la suite, pour vérifier que la tag physique n'a pas été déplacé vers un autre produit, un nouveau scan moléculaire est effectué, par exemple par l'acheteur du produit en question, et les informations de composition moléculaire relevées sont comparées avec le contenu du tag, pour certifier que le tag est bien sur son produit d'origine.

D'autres techniques permettant d'associer des caractéristiques uniques d'un produit avec son tag physique peuvent également être utilisées.

Dans le cas où une étape de transformation dans la chaîne amène, au niveau d'un équipement certificateur, à modifier les caractéristiques uniques d'un produit (typiquement son aspect visible ou sa composition en spectrométrie infrarouge proche), alors cet équipement certificateur peut être habilité à modifier ou compléter les données correspondantes dans le tag physique, ou à remplacer le tag physique.

### Engagements de capacité de bienveillance et engagements de reprise

On va définir les termes utilisés et décrire des procédés d'exécution de transactions de transfert d'engagements, d'engagements de capacité de bienveillance en cas de survenance d'événements de types donnés, et d'engagements de reprise d'engagements entre entités émettrices.

Entité émettrice (d'un engagement donné) : Entité qui génère un engagement donné.

Acquéreur : Pour un engagement d'une entité fournisseur de l'engagement envers une entité bénéficiaire de l'engagement, l'« acquéreur » est cette entité bénéficiaire. On dit que ce dernier « acquiert » l'engagement en question. Ainsi, la première entité bénéficiaire d'un engagement généré est son premier acquéreur. Pour les acquéreurs suivants, l'engagement étant généré en un Wallet Message initial par l'entité fournisseur de l'engagement, une transaction de transfert (voir plus bas) de cet engagement à l'acquéreur suivant est mis en œuvre en un autre Wallet Message transmis à ce dernier, comprenant le Wallet Message initial dans son contenu. Avantageusement, pour des engagements d'une entité émettrice donnée, un engagement conditionnel « CCC » (voir plus loin) peut être fourni à l'acquéreur, dont un événement déclencheur est l'échec de l'échange desdits engagements d'une entité émettrice donnée via le réseau d'échange (voir plus bas). Les transferts d'engagement sont, le cas échéant, « acceptés » au moyen de Wallet Messages inverses retournés par l'acquéreur suivant. On va s'intéresser dans la suite de cette section spécifiquement aux « engagements au porteur » : ce sont des engagements dont le premier acquéreur est l'entité fournisseur elle-même (entité émettrice) et qui peuvent ensuite être transmis de cet acquéreur à un autre et ainsi de suite. (Sauf indication contraire, dans la suite « engagement » signifie « engagement au porteur » et il s'agit en général d'engagements échangeables contre n'importe quels autres engagements, du même fournisseur, ayant au moment courant la même valeur).

Valeur d'un engagement : A chaque engagement est associée, outre l'adresse de l'entité émettrice, sa valeur en unités de compte (UA), unités communes pour tous les engagements. Des engagements d'une même entité (c'est-à-dire générés par une même entité émettrice) sont potentiellement échangeables (dans le « réseau d'échange », voir plus bas) contre des engagements d'une autre entité ayant la même valeur (c'est-à-dire, à laquelle la même valeur est associée).

Mémorisation des engagements au niveau de chaque entité : Lors d'un transfert d'engagement (quelle que soit l'entité qui transfère), des données comprenant l'adresse de l'entité émettrice, ainsi que la valeur de l'engagement, sont mémorisées au niveau de l'acquéreur vers lequel l'engagement est transféré, ce qui permet de mettre à jour, au niveau de ce dernier, le « solde » pour cette entité émettrice (voir ci-dessous).

**Solde (d'une** entité donnée, pour les engagements d'une entité émettrice spécifique) : Valeur totale (en UA) des engagements d'une entité émettrice spécifique, envers l'entité donnée. A chaque entité, pour chaque ensemble d'engagements d'une entité émettrice différente, est associé (explicitement ou implicitement) un tel solde, et les soldes non nuls y sont mémorisés (les soldes non mémorisés ont implicitement un solde nul).

### Montants + et Montants - :

A chaque entité est associée l'information des engagements à échanger (via le « réseau d'échange », voir ci-dessous), à savoir :
- 'Montants +' : de quelles entités émettrices cette entité déclare être disposée à transférer les engagements, et pour quelle quantité maximale donnée en UA (évidemment, les Montants + doivent être supérieurs ou égaux aux soldes correspondants) ;
- 'Montants _' : de quelles entités émettrices cette entité déclare rechercher (être disposé à acquérir) les engagements, et pour quelle quantité maximale donnée en UA.

A noter que chaque entité a comme l'un des 'Montants +' ses propres engagements en tant qu'entité émettrice (pour une quantité qui par défaut est infinie).

Ainsi, lesdits 'Montants +' et 'Montants -' sont des couples {entité émettrice, quantité en UA}.

Réseau d'échange : Ce réseau est constitué de nœuds qui sont les entités auxquelles sont associés des 'Montants +' et des 'Montants -', et les arêtes entre nœuds sont des correspondances de montants de signes opposés. A chaque arête est associée l'entité émettrice et la quantité d'UA (capacité au sens des réseaux de flots ou « flow networks » en anglais) d'engagements échangeables par matching de montants + et - (c'est le minimum des montants de signes différents indiqués de part et d'autre pour cette entité émettrice). Pour une bonne compréhension, on considère ici qu'entre deux nœuds il existe autant d'arêtes que d'entités émettrices pour lesquelles il existe de part et d'autre des 'Montants +' et des 'Montants -'. Le réseau d'échange permet ainsi par exemple d'échanger des engagements d'entités émettrices différentes entre un nœud (entité) A et un nœud (entité) B, en une « transaction d'échange », en considérant le réseau d'échange comme un réseau de flot (« flow network » en anglais), et, pour prendre un exemple purement illustratif :
- en déterminant les chemins pour des transferts d'engagements maximisant les UA transférés dans le sens A à B,
- ainsi que dans le sens inverse (B à A), et
- en faisant transférer des engagements pour le minimum en UA entre ces deux sens,
ces transferts résultant en l'échange maximum possible compte tenu des 'Montants +' et des 'Montants _' déclarés par A et B.

Dans la pratique, les réseaux de flots comprennent des moyens d'équilibrage de charge (balancing) qui sont connus et l'homme du métier pourra s'en inspirer.

Transaction d'échange : Transaction consistant à échanger sur le réseau d'échange des engagements de même valeur, d'entités émettrices différentes, dans la mesure des capacités sur ce réseau vu comme un réseau de flot.

Transaction de transfert d'engagement(s) : Transaction de transfert, par une entité à une autre, d'au moins un engagement d'une entité émettrice donnée et pour une valeur donnée (en UA).

Transaction de transfert d'UA (par opposition à Transaction de transfert d'engagements) : Transférer une valeur donnée (en UA) à une entité destinataire revient à :
- acquérir, par une transaction d'échange, des engagements de cette dernière (ou en avoir déjà suffisamment) pour cette valeur donnée, puis
- effectuer une transaction de transfert de ces engagements acquis.

A titre d'illustration, un transfert de 100 UA par l'entité 'A' à l'entité 'B' est par exemple réalisé selon les étapes suivantes :
1. dans 'A' est ajouté (par un input utilisateur) 100 UA d'engagements de 'B' dans les 'Montants -' et une transaction d'échange est initiée, ceci en vue d'échanger pour 100 UA, si possible, des engagements figurant dans ses 'Montants +' contre des engagements de 'B', (qu'au moins 'B' a dans ses 'Montants +', comme déjà évoqué), sur le réseau d'échange, puis
2. une transaction de transfert d'engagements de 'B' pour 100 UA est exécutée de 'A' à 'B'.

Dans le cas où le réseau d'échange ne permet pas d'acquérir la totalité de ces 100 UA d'entités émettrice 'B', il reste pour 'B' l'option de générer un « engagement de capacité » (CC, voir plus bas) pour une quantité d'UA supérieure ou égale aux UA non acquis par la transaction d'échange.

En d'autres termes, le système est composé d'entités formant des nœuds d'un réseau liés par des engagements non conditionnels entre émetteurs d'engagement et acquéreurs d'engagements, ayant des valeurs en unités de compte communes à tous les engagements, chaque nœud comportant une mémoire contenant :
- des soldes d'engagements émetteur par émetteur,
- des montants d'engagements disponibles pour d'autres nœuds (Montants+) ou recherchés à partir d'autres nœuds (Montants-), émetteur par émetteur,

des unités de compte correspondant à des engagements pouvant être transférées entre les nœuds, et les soldes et montants au niveau des différents nœuds étant recalculés en conséquence, et le réseau de nœuds constituant un réseau de flots dont les capacités des arêtes entre nœuds sont déterminées en fonction des engagements disponibles et des engagements recherchés pour une entité émettrice donnée,
et dans lequel, un transfert d'unités de compte d'une première entité à un deuxième entité est mis en œuvre par les étapes suivantes :
   - si un solde d'engagement au niveau de la première entité pour une entité émettrice correspondant à la deuxième entité est suffisant, réaliser le transfert d'unités de compte requis,
   - si ce solde est insuffisant, augmenter le montant d'engagements recherchés (Montant-) pour cette même entité émettrice au moins pour les unités de compte manquantes,
   - exécution d'un processus d'équilibrage de charge du réseau de flots en vue de satisfaire tout ou partie du de cette recherche, et
   - réaliser ou compléter le transfert d'unités de compte dans la mesure des engagements recherchés qui ont été satisfaits par cet équilibrage.

Type de CCC (ou Type d'engagement de capacité de bienveillance) : « Engagements de capacité de bienveillance » (ou « CCC », comme « Care Capacity Commitment », voir plus bas), spécifiant des mêmes conditions de déclenchement (tel que la signature d'un arbitre prédéterminé). Un même identifiant de type de CCC est associé aux « engagements de capacité de bienveillance » de même type de CCC. Chaque type de CCC spécifie la procédure de vérification de(s) signature(s) le cas échéant prévue(s) dans ladite condition de déclenchement.

Evénement déclencheur de transfert : Un « engagement de capacité de bienveillance » (CCC, voir ci-après) est déclenché par la réception de la notification d'un événement déclencheur de transfert, tel que :
- une reprise (« takeover ») par exécution d' « engagements de takeover » (TOC, voir plus loin),
- une signature d'un arbitre prédéterminé (ou plusieurs), confirmant typiquement la survenance d'un événement inattendu (accident, maladie, incendie, catastrophe naturelle, panne, etc.),
- une décision prise par le fournisseur d'engagement CCC,
le contenu de cette notification comprenant les signatures conformément auxdites conditions de déclenchement.

A chaque événement déclencheur de transfert est associé un montant en UA (également communiqué par ladite notification), qui est le dommage associé à cet événement.

Engagement de capacité de bienveillance (CCC, comme « Care Capacity Commitment ») : Un « engagement de capacité de bienveillance » (CCC) est
- un engagement basé sur
   ∘ des soldes réservés (réservés au type de CCC de l'engagement en question, globalement pour l'ensemble des entités bénéficiaires de CCC de ce type) et
   ∘ une capacité de transfert (transfert potentiel) d'UA à l'entité bénéficiaire de l'engagement en question,
- dont la finalité est
   ∘ de faire transférer des UA par l'entité fournisseur d'engagement de CCC à l'entité bénéficiaire de cet engagement (parmi, le cas échéant, plusieurs entités bénéficiaires d'engagement de CCC du même type) lorsque cette dernière notifie un événement déclencheur de transfert correspondant aux conditions de transfert du type de CCC de l'engagement en question,
   ∘ et réciproquement, de faire transférer des UA par l'entité bénéficiaire de l'engagement en question (ainsi que, le cas échéant, d'autres entités bénéficiaires d'engagement de CCC du même type à l'aval), et de proche en proche, le cas échéant, par des entités bénéficiaires d'engagement de CCC plus loin en aval, vers l'entité fournisseur de l'engagement en question, lorsque cette dernière notifie un événement déclencheur de transfert correspondant aux conditions de transfert du type de CCC de l'engagement en question,
   ces transferts étant globalement effectués au sein d'une « transaction atomique » (sujette à rollback) et selon des étapes en cascade décrites ci-dessous. Ainsi, par conception, les fournisseurs de CCC sont motivés du fait qu'ils sont susceptibles de bénéficier de transferts d'UA de l'aval (en cas de survenance d'événements déclencheurs du type de CCC desdits CCC).

Dans ce but, à chaque entité, pour chaque type de ses CCC générés sont associés des « soldes de CCC » (voir plus bas) qui sont chacun consacré à l'ensemble des CCC de ce type générés par cette entité, et chaque CCC envers une entité bénéficiaire donnée spécifie
- son type de CCC (ce qui permettra de vérifier les signatures le cas échéant requises par ce type de CCC) et
- une capacité restreignant les UA transférables (par unité de temps) vers cette entité bénéficiaire donnée (les UA effectivement transférées dépendant, bien entendu, des soldes courants de CCC).

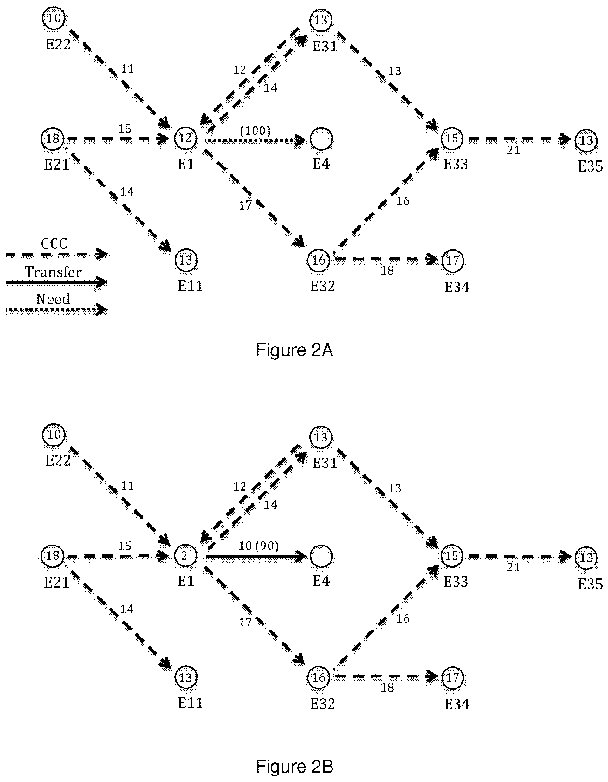

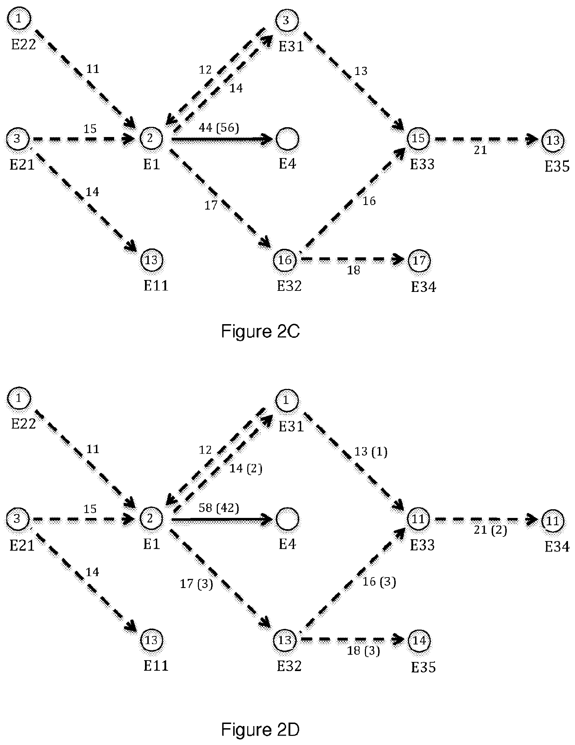

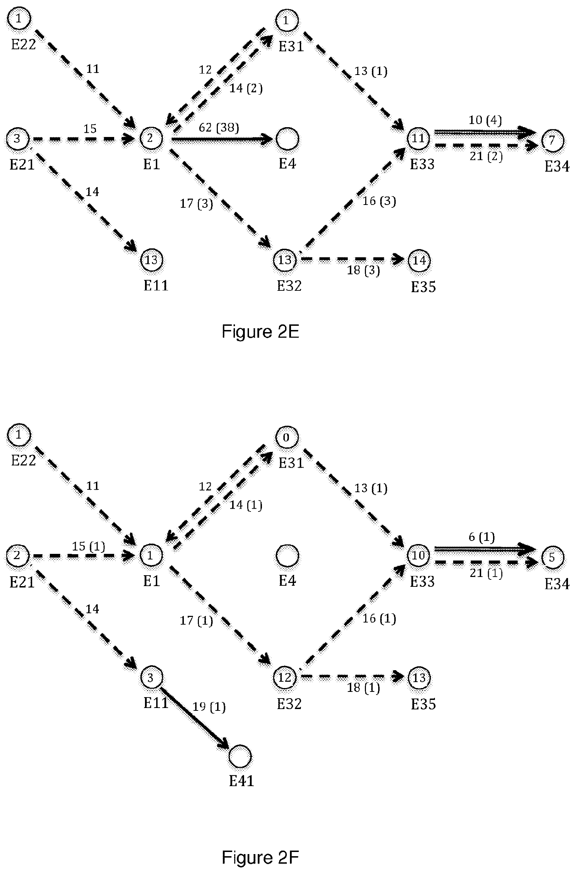

Ainsi, l'exécution d'une transaction atomique d'exécution de CCC fait intervenir
- l'entité qui subit ledit événement déclencheur (E1),
- ses entités à l'amont (E2..),
- ses entités à l'aval (E3..) et
- l'entité (E4) vers laquelle les UA correspondant au dommage causé par l'événement en question sont à être transférées in fine (au commit de ladite transaction atomique) pour y remédier (cf. les Figures 2..). Toutes les transactions de transfert d'engagements effectuées par l'exécution du CCC concernent ainsi le transfert d'engagements de l'entité émettrice E4 spécifiquement. (A noter que les Figures 2.. ne détaillent pas les soldes de CCC distinctement par entité émettrice mais présentent un solde de CCC global en UA au niveau de chaque nœud.)

Le procédé d'exécution d'un CCC comprend les étapes suivantes :
A- Comme le présente la Figure 2A au moyen d'un exemple, tout d'abord un événement déclencheur d'un type donné (événement subi par l'entité E1) cause le besoin d'un transfert (de 100 UA) par E1 à une entité (E4) prévue pour ce type d'événement (ceci est montré avec la flèche en pointillés).
B- En réaction, E1 effectue des transactions de transfert d'UA à E4 pour la plus grande partie possible du dommage résultant (100 UA), en fonction de ses soldes CCC courants ainsi que de l'état courant du réseau d'échange (pour déclencher ces transferts, E1 a ajouté des 'Montants -' pour l'entité émettrice E4 et la quantité 100 UA). La Figure 2B (voir la flèche pleine de E1 à E4) montre que dans cet exemple seules 10 UA ont pu être transférées à E4 et qu'il reste chez E1 un solde de CCC de 2 UA d'entités émettrices diverses qui n'ont pas pu être échangées sur le réseau d'échange.

Au cas où le dommage n'est pas entièrement réglé (comme l'indique la Figure 2B, c'est le cas dans l'exemple considéré puisqu'il manque 90 UA à transférer), E1 envoie, aux entités fournisseur des CCC dont elle est bénéficiaire (ce sont les entités E21, E22 et E23), la notification de l'occurrence de cet événement ainsi que du type du CCC en question.

C- Lesdits CCC dont E1 est bénéficiaire lui permettent de bénéficier de transferts de l'amont, en fonction des capacités respectives de ces CCC et de leurs soldes courant de CCC.

(Dans un mode de réalisation préféré, les quantités transférées de la part des entités fournisseurs de CCC à l'amont sont uniformément réparties entre ces entités pour une première tranche correspondant à la capacité la plus faible entre ces entités, puis pour le restant uniformément entre les entités restantes, et ainsi de suite jusqu'à que le dommage soit couvert ou que toutes les capacités soient atteintes.)

Ainsi, la figure 2C montre que dans et exemple, E21, E22 et E23 transfèrent respectivement 15, 9 et 10 unités, conformément à leurs soldes de CCC respectifs pour différentes entités émettrices et la capacité de leurs CCC respectifs (i.e. les quantités d'UA transférées ne peuvent déborder les capacités des CCC respectives auxquels elles correspondent et les valeurs des engagements d'entités émettrices données qui sont transférées sont inférieures ou égales aux soldes de CCC courant pour ces entités émettrices données).

Au cas où les transferts de l'amont suffisent, la transaction atomique de CCC en question est entérinée (« commit » en anglais).

D- Au cas où les transferts de l'amont ne suffisent pas (ce qui est le cas dans l'exemple puisqu'il manque 56 UA à transférer, comme l'indique la Figure 2C), les CCC dont E1 est cette fois-ci fournisseur lui permettent de bénéficier de transferts de l'aval, de proche en proche, en suivant les CCC du même type (vers l'aval, c'est-à-dire en les suivant en sens inverse), en fonction, à chaque étape du parcours, du restant à transférer, des soldes de CCC (pour des entités émettrices spécifiques, voir plus bas) au niveau de chaque nouvelle entité mise à contribution sur un chemin à l'aval, en fonction aussi des limitations spécifiées pour le type du CCC (voir plus loin) et enfin des capacités à ne pas dépasser (les capacités des « maillons les plus faibles » sur les chemins traversées). La quantité des UA transférées (si l'on ne tient pas encore compte de cas de « redevabilité » - voir plus bas - des transferts éventuels effectués auparavant par E1 vers l'aval, cas décrit ci-dessous et illustré à la Figure 2E) est égale ou inférieure au résultat d'une fonction prédéterminée (et spécifiée, pour le type de CCC en question, dans l'engagement exécutable de CCC) appliquée aux capacités respectives de ces CCC : par exemple un coefficient de 20% est appliqué aux capacités des CCC de premier niveau et typiquement ce coefficient décroit légèrement à chaque niveau suivant. La Figure 2D indique que, pour cet exemple, 2 UA sont transférées (indication (2)) de E31, 3 UA sont transférées (indication (3)) de E32, une UA est transférée (indication (1)) de E33 via E31, 3 UA sont transférées (indication (3)) de E33 via E32, 2 UA sont transférées (indication (2)) de E34 via E33 et E31 et 3 UA sont transférées (indication (3)) de E35 via E32. Ainsi, un total de 14 UA sont transférées de l'aval, amenant le total transféré à E4 à 58 UA et donc le manque à transférer à 42 UA.

E- On va maintenant décrire le concept de « redevabilité » et l'étape qui y correspond. Lorsqu'une entité bénéficiaire de CCC à l'aval avait elle-même reçu un transfert dans le passé dont elle en est encore « redevable », sa contribution dans un « transfert de l'aval » est supérieure. Pour exemple, la Figure 2E présente (par une double flèche) le cas d'un transfert effectué dans le passé de 10 UA. L'idée de cet aspect de l'invention est que ces 10 UA représentent en quelques sortes une redevabilité de E35 (avec son sens usuel) envers tout d'abord E33, mais aussi envers les entités à l'amont de E33 pour le même type de CCC, et ceci à chaque fois en relation avec les capacités de chacun des CCC traversés en question (jouant un rôle de filtre). L'existence de cette redevabilité de 10 UA résulte dans cet exemple en un transfert supplémentaire de l'aval de 4 UA (comme indiqué dans la figure sur la double flèche), ces 4 UA résultant de l'application, à ladite quantité de 10 UA, d'un coefficient dont l'effet est de décroitre la quantité à devoir transférer en fonction du nombre de niveaux traversées vers l'aval (en l'occurrence deux niveaux ont été traversés dans chacun des deux chemins de l'exemple présenté à la figure 2E : le chemin E1-E32-E33-E34 et le chemin E1-E31-E33-E34 - à noter que lorsque plusieurs chemins existent, ils se cumulent, de façon à avantager l'entité à l'amont, compte tenu du fait que chaque chemin est susceptible d'augmenter la capacité globale du 'transfert de l'aval'). Ainsi, comme indiqué dans la figure E32, le total transféré est maintenant de 62, laissant donc un manque à transférer à E4 de 38 UA. Suite à ce 'transfert de l'aval" de 4 UA, ladite redevabilité de 10 UA sur ce CCC est diminuée d'autant et est ainsi mise à jour à 6 UA.

Comme déjà dit, tous les transferts de l'aval sont filtrés par les capacités des CCC se trouvant sur le chemin traversé. Si par exemple la capacité du CCC de E1 envers E32 n'était pas de 17 UA, mais de 2 UA, seul 2 UA au auraient pu être transférées de l'aval via ce chemin par E32, E34, E33 et E35.

Au cas où les transferts de l'aval suffisent, la transaction atomique de CCC en question est entérinée.

F- Au cas où les transferts de l'aval ne suffisent pas (dans l'exemple, il manque maintenant 38 UA), E1 le notifie aux entités (E2) fournisseurs de CCC à l'amont et ce sont les CCC dont ces dernières sont bénéficiaires qui **permettent** à E1 de bénéficier de transferts indirects de l'amont, c'est-à-dire de transferts par des entités à l'amont des entités E2 (en fonction des capacités respectives de leurs propres CCC envers ces dernières, ainsi que leurs propres soldes de CCC, pour le même type de CCC), récursivement, de proche en proche. E1 bénéficie ainsi de transferts de plus en plus indirects par des entités fournisseurs de CCC de plus en plus à l'amont, jusqu'à que le dommage soit entièrement réglé (par transferts d'UA de E4) ou qu'un niveau de récursion prévu dans les CCC soit atteint.

G- Enfin, au cas où les transferts indirects de l'amont ne suffisent pas non plus à régler le dommage, E1 en informe E4 qui peut alors fournir à E1 un « engagement de capacité » (« CC », voir plus bas) et entériner la transaction atomique de CCC en question ou sinon refuser la transaction de transfert en réponse à l'événement déclencheur de transfert, ce qui entraîne alors le rollback de la transaction atomique de CCC en question.

La mis en œuvre des commit/rollback de transactions dans l'invention est décrite plus loin (cf. « Wallet Node »).

Triangulation : Comme décrit et illustré plus loin avec l'histoire faisant intervenir « Ben » et « Celia » qui souligne la motivation qu'ont naturellement les fournisseurs de CCC, les transferts de l'aval (par des entités bénéficiaires de CCC à l'aval) bénéficient aussi (potentiellement) à d'autres entités (de manière analogue aux transferts de l'aval dont bénéficie E1 dans l'exemple ci-dessus) : ces autres entités qui bénéficient aussi de l'aval sont celles dont l'entité fournisseur de CCC à l'amont est aussi à l'amont d'entités bénéficiaires de CCC à l'aval mais par d'autres chemins (pas via elles-mêmes). Autrement dit, lesdits « E3.. » sont à l'aval desdits « E2.. » sans être à l'aval dudit « E1 ».

Ainsi la Figure 2F présente l'exemple d'un événement déclencheur subi par une entité E11 (au lieu de l'entité E1 de l'exemple ci-avant, en correspondance avec l'étape A présentée à la Figure 2A) pour un dommage de 20 UA à régler à E41 (au lieu de E4).

A l'étape 'B', E11 transfère 10 UA à E41 (10 UA de ses 'Montants +' faisant partie de ses soldes de CCC, qu'elle a pu échanger pour obtenir des engagements de E41 de même valeur).

A l'étape 'C' (transfert par l'amont), E21 transfère 1 UA à E41.

A l'étape 'D' (transferts de l'aval), dans cet exemple (pour faire simple), par chaque entité à l'aval de E21, à savoir E1, E31, E32, E33, E34, E35, 1 UA est transférée à E41 sur chaque chemin.

A l'étape 'E' (redevabilité), E34 (qui est couramment redevable de 6 UA) transfère encore 1 UA.

Ce qui fait un total de 19 UA transférées, par l'ensemble des entités de l'exemple, sauf E22 qui ne se trouve ni à l'amont ni à l'aval de E21, et il reste un manque de 1 UA pour régler les 20 UA du dommage, pour laquelle E41 accepte dans cet exemple de générer un « engagement de capacité » (« CC », voir plus bas) et entérine alors la transaction atomique pour l'exécution de ce CCC dont E21 est l'entité fournisseur d'engagement et E4 l'entité bénéficiaire d'engagement. A noter que si d'autres entités fournissaient des CCC à l'amont de E21, l'étape F (transferts indirects de l'amont) auraient peut-être permis de combler ce manque à gagner de 1 UA.

Avantageusement, des limitations peuvent être mises en œuvre dans les engagements exécutables CCC (selon leurs types respectifs), notamment pour le cas de transferts de l'aval par triangulation dont un exemple est donné ci-dessus, enforçant par exemple que : le total des quantités reçues, par exécution de CCC d'un type donné, par l'aval mais par triangulation via une entité amont (tel que E21) n'excède pas un seuil qui est fonction du total des transferts effectifs par ce nœud amont (E21) par exécution de CCC du même type (cette limitation pouvant être mise en œuvre en maintenant une quantité de 'droit à triangulation', de manière analogue à la mise en œuvre de la 'redevabilité' décrite plus haut).

Ainsi, pour récapituler, l'exécution d'un CCC d'une entité « A » envers une entité « B » engendre en quelques sortes un engagement inverse implicite tant de B envers A, que par triangulation : de B (ainsi que les entités plus à l'aval dans le réseau des CCC) envers toute entité bénéficiaire d'un CCC fourni par A (et de même type) déjà généré ou généré dans le futur. Avantageusement, il est aussi prévu que la mise en œuvre des CCC enforce que l'exécution de ces engagements implicites - par B et par les entités à l'aval de B sur des arêtes du réseau des CCC - est une condition pour tous les CCC du même type et sur les mêmes arêtes. En d'autres termes, lorsque B ou une entité à l'amont de B ne répond pas vis-à-vis d'un tel engagement implicite, les arêtes en question sont pénalisées pour elle en ce qui concerne une contribution potentielle par A ou par d'autres entités, existants ou générés dans le futur, sur ces mêmes arêtes.

Solde de CCC (d'une entité donnée, *pour un type de CCC donné* et pour les engagements d'une entité émettrice spécifique) : Valeur totale (en UA) des engagements d'une entité émettrice spécifique, envers l'entité donnée, qui sont réservés aux transactions de transferts d'UA par exécution de CCC du type donné. A chaque entité, pour chaque ensemble d'engagements d'une entité émettrice différente, est associé (explicitement ou implicitement) un tel solde, et les soldes non nuls y sont mémorisés (les soldes non mémorisés ont implicitement un solde nul). Ces soldes peuvent fluctuer mais toute modification d'un solde de CCC doit respecter un préavis donné prévu dans le CCC.

Engagement de capacité (CC) : Un engagement de capacité (CC, comme « Capacity Commitment ») permet de compenser un transfert d'UA à effectuer par une mise à jour de capacité consommée UC (comme « Used Capacity »), la capacité courante disponible étant alors diminuée de la quantité des unités consommées en question. Les engagements de capacité forment un réseau de flot, dont les nœuds sont les entités fournisseur et/ou bénéficiaire de CC et dont les arêtes représentent les CC auquels sont associés des capacités et des UC (et forment des chemis dans le réseau de flots), à travers lequel des UC peuvent être mis à jour afin de compenser des transferts à effectuer.

Engagements de reprise (TOC) : Les engagements décrits jusqu'ici peuvent servir dans un procédé de gestion d'engagements de reprise d'engagements de fourniture (TOC, comme « TakeOver Commitment ») formant chambre de compensation en P2P, où
- des engagements de fourniture de biens ou services acquis de fournisseurs d'origine, sont exécutés par d'autres entités (à qui l'acquéreur transfert ces engagements), ces autres entités fournissant ainsi ces biens ou services à la place des fournisseurs d'origine, et
- ces autres entités reçoivent alors automatiquement une compensation correspondante par les fournisseurs d'origine.

Ainsi les engagements qui peuvent être repris deviennent (partiellement) « fongibles ».

Chaque engagement de fourniture a une valeur en UA (valeur nulle par défaut), par exemple pour la location d'une chambre évoqué plus haut, l'engagement d'y fournir l'accès sur demande a une certaine valeur (par exemple une location mensuelle a la valeur de 100 UA).

Selon cet aspect de l'invention, une pluralité d'entités fournisseur d'engagement (de fourniture de biens ou services) - par exemple, plusieurs propriétaires de chambres, mais ces entités peuvent aussi représenter des fournisseurs de biens ou services de natures différentes - s'interconnectent au moyen d'engagements TOC signifiant « J'accepte de reprendre ton engagement contre compensation de sa valeur de ta part », formant ainsi un réseau de TOC, au sens qu'un engagement acquis (contre par exemple 100 unités de compte, représentant sa valeur) est aussi valable vis-à-vis de toutes les autres entités de la pluralité qui ont fourni un TOC (par exemple pour que les acquéreurs puissent accéder à n'importe chambre vacante de ces propriétaires), les entités en question se compensant alors automatiquement selon le procédé de l'invention.

Les compensations en question sont effectuées soit individuellement par chacun, soit par exécution de CCC (décrit ci-avant), par rapport à des événements déclencheurs que sont ces compensations.

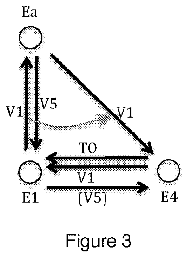

Ainsi, lorsque dans un réseau de takeover, un engagement (V1) d'une valeur donnée (par exemple de 100 UA, comme dans l'exemple des Figures 2.., qui sont complémentaires à la Figure 3 expliquée ci-après) est généré et transféré à un acquéreur (Ea), par une entité représentant un premier fournisseur (E1), contre un engagement (V5, d'une autre entité), et Ea tente de faire exécuter V1 par une entité (E4) représentant un autre fournisseur (par exemple pour accéder à une chambre d'un autre propriétaire représenté par, ou dont la serrure est contrôlée par, cette entité E4), cette dernière (E4) étant une entité fournisseur d'engagement de takeover envers le fournisseur initial E1.

Plus précisément, la Figure 3 permet de comprendre les étapes du procédé qui sont les suivantes:
1. Une entité fournisseur E4 génère (en tant que fournisseur d'engagement) un TOC, l'engagement TO, pour des engagements V1, envers une entité E1 (en tant que bénéficiaire du TOC).
2. E1 (cette fois-ci en tant que fournisseur d'engagement) génère un engagement de fourniture (V1).
3. Une entité Ea acquiert V1 en échange de V5.
   (Noter que V5 pourrait aussi être un certain produit échangeable ou de la monnaie totalement fongible - monnaie classique telle que des euros -, auquel cas, à l'étape 6 (voir plus loin) l'exécution du TOC consistera à transférer cette monnaie reçue au fournisseur effectif E4.)
4. L'utilisateur (représenté par) Ea désire faire exécuter V1 non pas par E1 mais par E4 (ceci est représenté dans la figure par une flèche courbe vers la droite) et, dans ce but, Ea transmet l'engagement V1 (généré par E1 à l'étape 2) à E4 dans le cadre d'une transaction atomique qui se terminera à l'étape 6.
5. E4 retourne V1 à E1 dans le cadre de l'exécution de TO.
6. A réception, E1 exécute TO (où il s'agit d'effectuer le transfert des UA de la valeur de l'engagement reçu V5) - l'exécution de TO met en œuvre des CCC dont E1 est bénéficiaire - et suite à cette exécution, comme décrit dans la section précédente, E1 notifie E4 du résultat que E4, le cas échéant, accepte pour valider la transaction et exécuter alors, en lieu et place de E1, ledit engagement V1 dont Ea est bénéficiaire.

Ainsi, le fait d'exploiter des CCC (de type TOC) pour les reprises d'engagements de reprise permet de mettre en œuvre un réseau de compensation automatique en P2P, dans lequel lesdites compensations sont totalement prises en charge par l'exécution de ces CCC.

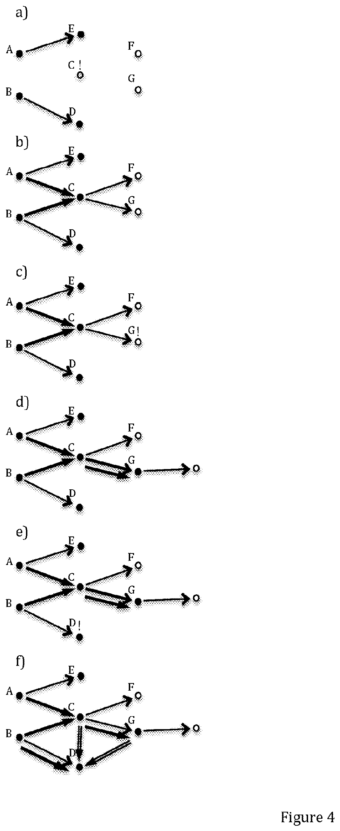

En référence à la Figure 4, on a représenté en guise d'illustration d'une mise en œuvre possible de l'invention une histoire très simple d'une telle chaîne dans un réseau avec des nœuds A à G, représentant respectivement des Wallet Node (chacun mettant en œuvre un nœud du réseau) appartenant à Alice, Ben, Celia, Dan, Emma, Fanny et Gino.

Vue par rapport à la Figure 4, l'histoire de cet exemple est la suivante :
Celia a perdu son smartphone aujourd'hui... et n'a pas l'argent pour le remplacer. Sans son smartphone, elle se sent perdue!

Celia est sur Facebook avec ses amis Alice et Ben. Alice et Ben sont des utilisateurs fréquents de l'app « tribe-chain » (le système de l'invention). Et ils sont toujours prêts à aider leurs amis. Ils ont mis un peu d'argent de côté et ont déclaré, sur l'app, être prêts à aider Emma et Dan respectivement. (Ceci est représenté dans la partie a) de la Figure 4 par une flèche de A vers E et une flèche de B vers D.)

Bien que Celia ne soit pas un utilisateur de tribechain, lorsque Celia *signale* son problème sur Facebook (ceci est représenté dans la partie a) de la Figure 4 par un point d'exclamation sur C), Alice et Ben décident de l'aider en utilisant l'app (ceci est représenté dans la partie b) de la figure par des flèches représentant des transactions d'unités de compte de A vers C et de B vers C). Ceci a pour effet de connecter Celia au réseau tribechain. (Cette signalisation peut être effectuée par exemple par diffusion en push d'une information représentative de cette difficulté vers les amis d'un réseau social, ou lorsque les amis se connectent sur un tel réseau social sur lequel une indication de la difficulté est signalée.)

Avec les fonds provenant de ses amis, Celia remplace son smartphone. Elle est vraiment reconnaissante, et elle se sent redevable. Alors elle décide de participer au réseau tribe-chain et le mois suvant, elle met de côté un peu d'argent (via une interface homme/machine appropriée, elle alimente le compte de son nœud - ceci est représenté dans la figure par un nœud plein) et déclare que, non seulement elle est bien sûr prête à aider Alice et Ben (ce qui est automatique dans l'application - et ce n'est pas montré dans la figure), mais elle est aussi prête à aider ses amis Fanny et Gino (ce qui est représenté dans la partie b) de la figure par les flèches de C vers F et G).

Maintenant, Gino a un problème (ceci est représentée dans la partie c) par un point d'exclamation sur le nœud G).

Puisque Celia avait déclaré être prête à aider Gino, sa contribution se déclenche (ceci est représenté dans la partie d) par une deuxième flèche de C vers G indiquant une transaction d'unités de compte).

Gino se sent redevable, alors il met de côté un peu d'argent et déclare qu'il est prêt à aider encore un autre nœud dans le réseau (aussi montré dans la partie d).

Maintenant, Dan a un problème (ceci est montré dans la partie e) par un point d'exclamation).

Comme il l'avait déclaré, Ben aide Dan (ceci est montré dans la partie f) - et la première flèche de B à D, représentant son intention d'aide, était montrée dès la partie a), mais dans la mesure où il lui reste des fonds seulement. En effet, Ben avait auparavant aidé Celia.

Dans le système (mis en œuvre dans un Wallet Node exécutant l'engagement exécutable en question, l'app tribe-chain ofrant l'interface utilisateur dans le terminal utilisateur) selon le processus de l'invention, *non seulement Ben aide Dan, mais aussi Celia aide Dan* (ceci est représenté par une double flèche de C vers D, dans la partie f).

Cette «triangulation» est tout à fait justifiée. Après tout, Ben a utilisé son propre argent pour aider Celia, et maintenant, lorsque Ben a envie d'aider Dan, on pourrait dire que son argent est chez Celia.

Il est donc naturel que les fonds aillent maintenant de Celia à Dan. Cette contribution est donc déclenchée automatiquement, et ceci même si Celia ne connaît pas Dan.

On peut voir cette triangulation comme *Celia* qui rembourse *Ben* en aidant son ami *Dan.*

De plus, une contribution de Gino vers Dan est aussi déclenchée automatiquement (ceci est montré par une double flèche de G vers D, dans la partie f) puisqu'en quelque sorte même Gino a été aidé par Ben, indirectement, via Celia.

Ainsi, fin de l'histoire, Ben est heureux que Celia et Gino aient contribués. Il est d'autant plus heureux qu'il manquait des fonds pour aider Dan. Et pour Celia et Gino, cela est une bonne occasion de rencontrer Dan qu'ils ne connaissaient pas!

Dans un Wallet Program qui met en œuvre un tel engagement sur des relations directes ou indirectes de redevabilité, on préferera une implémentation où plus une redevabilité est indirecte (prenons par exemple la redevabilité de G envers D), plus la contribution qui y correspond (en l'occurrence, de G vers D) est d'un montant relativement inférieur (inférieur par rapport à la contribution de C vers D).

Par ailleurs, on peut considérer qu'une aide, par exemple de Ben à Celia, peut être un « don » (sans intérêts) ou un « prêt » (avec intérêts).

On considère par ailleurs les deux critères suivants, à savoir :
- si l'aide en question est pour un événement non-attendu (sinistre) ou une aide répondant à un souhait quelconque (qui n'est pas un sinistre)
- et s'il s'agit de monnaie usuelle ou sous la forme de bons d'achats spécialisés (vouchers),
et lors d'une aide - par exemple Ben veut aider Dan - l'algorithme détermine les contributions d'une chaîne à l'aval par rapport à ces critère, comme suit :
SI sinistre et vouchers ALORS distribuer les contributions à l'aval dans la chaîne, pour le montant nécessaire au traitement du sinistre en question (quel qu'il soit),
SINON SI sinistre (et monnaie usuelle) ALORS *distribuer* les contributions à l'aval dans la chaîne, pour le montant nécessaire au traitement du sinistre en question mais à concurrence (c'est-à-dire pas plus) du montant de l'aide initiale (de Ben à Celia),
SINON seul le nœud aidé par l'aide initiale contribue et pas plus du montant de l'aide initiale (de Ben à Celia). *Distribuer* signifie :
   Si la chaîne est par exemple Ben -> Celia -> Gino -> Henry ceci représente n=3 contributeurs à l'aval ;
   Soit m = n+(n-1)+(n-2)... jusqu'à zéro, donc dans cet exemple m = 3+2+1 = 6 ;
   Celia paye n/m = 3/6, Gino paye (n-1)/m = 2/6, Henry paye (n-2)/m = 1/6 du montant nécessaire (+ les intérêts dans le cas d'un prêt).

L'algorithme procède de l'amont vers l'avail et et dans le cas où il n'y a pas assez de fonds à l'un des nœuds, il reprend au début à partir du nœud courant et pour le montant restant nécessaire.

Bien entendu, dans l'exemple que nous venons de voir, si récemment d'autres nœuds ayant directement ou indirectement aidé des nœuds en difficulté ont aussi déclaré être prêts à aider Dan (qui, dans l'exemple, vient de signaler une difficulté), non seulement lesdits autres nœuds mais aussi lesdits nœuds en difficulté qui ont été directement ou indirectement aidés par ces derniers aident maintenant Dan d'office également, dans la mesure des fonds disponibles à ces nœuds, pour un montant qui dépend de la longueur de ladite chaîne d'indirection (ceci est exécuté par le Wallet Program qui met en œuvre leur engagement exécutable).

Lorsqu'une contribution se déclenche suite à une déclaration d'intention d'aide (telle que de B vers D ou de C vers G dans l'exemple de la Figure 4), l'utilisateur (respectivement B ou C) peut être invité *à confirmer* au préalable son intention de contribuer. Alternativement (ou en plus), l'engagement exécutable en question peut aussi prévoir la confirmation d'un tiers que l'on appelle « arbitre » dans la suite (confirmation directement émise par le Wallet Node de l'arbitre, décrit plus loin, ou la fourniture par le nœud bénéficiaire - respectivement D ou G - d'une signature électronique de l'arbitre), et l'aide se déclenche alors automatiquement dès cette confirmation.

Typiquement, c'est ainsi que fonctionne une assurance : en cas de sinistre, un expert (l'arbitre) avalise le paiement pour qu'il s'exécute.

Par opposition à ces contributions qui se déclenchent suite à une intention d'aide, les contributions automatiques dues à une redevabilité (telles que de C vers D ou de G vers D) ne nécessitent pas de confirmation (la confirmation se faisant déjà au niveau de la confirmation de B vers D).

Enfin, comparée à une *mutuelle* (ou une assurance classique) impliquant une réciprocité des engagements, il est remarquable que l'approche de réseau de liens d'engagements de *couverture de risques* de l'invention est plus inclusive, puisque ces liens peuvent être unidirectionnels et ne sont d'ailleurs pas forcément créés pour des raisons économiques - on n'est pas toujours incité à se mettre dans le pool des risques les plus faibles (au sens de « risk pooling »). L'exemple typique est celui d'un grand-père qui met de côté un certain montant d'unités de compte pour participer à la couverture d'une franchise éventuelle à payer en cas de maladie ou accident, franchise prévue dans les polices d'assurance de ses petits-enfants - c'est un lien unidirectionnel de couverture de risque. Dans cet exemple, le risque couvert est de devoir payer cette franchise et l'aide potentielle dont bénéficie chaque petit-enfant est formée des réserves de ceux qui ont des liens vers lui.

Selon un autre aspect, qui peut être mis en œuvre indépendamment de l'invention décrite dans ce qui précède, on prévoit un système et un procédé grâce auxquels la franchise qu'un nœud assuré propose (pour la police d'assurance) à une assurance (c'est-à-dire une entité telle qu'une compagnie d'assurance ou de réassurance) peut être déterminée *dynamiquement* en fonction du montant d'unités de comptes que ce nœud est disposé à payer lui-même en cas de sinistre et des réserves courantes des nœuds qui ont des liens vers lui à cet effet, la prime qu'il a alors à payer à l'assurance étant déterminée par intégration des primes dues à chaque instant en fonction de ladite franchise qui résulte de sa propre situation et de la situation desdits nœuds qui ont un engagement envers lui.

La même app tribechain d'entraide en réseau peut être utilisée pour former un « pot commun » avec des amis, pour se couvrir face à certains risques. Et, pour les plus hauts niveaux de risques, qui ne sont pas couverts avec un tel pot commun, les utilisateurs de l'app tribechain peuvent y trouver des assureurs classiques, mais selon le procédé de l'invention, les primes à payer par chaque utilisateur à l'assureur seront flexibles dans la mesure où le pot commun disponible à chaque nœud est variable.

On peut illustrer cet aspect par l'histoire est la suivante :
Alice et Ben ont chacun une maison et décident de mettre de côté 1500 € chacun pour avoir un pot commun de 3000 € pour le cas où la maison de l'un d'entre eux brûlerait.

Tribe-chain est aussi l'app de couverture de risque en p2p (Wallet Nodes) qui permette de le faire de manière sécurisée, ainsi que de faire appel à une compagnie d'assurance pour couvrir les montants au-delà du pot commun mis en place, ce pot commun étant vu comme une franchise.

En utilisant tribe-chain, Alice et Ben trouvent une compagnie d'assurance proposant une prime moins élevée compte tenu de la franchise de 3000 € par sinistre, que représente leur pot commun.

Alice et Ben pensent qu'il est improbable que leurs deux maisons brûlent la même année, et ils sont prêts à prendre ce risque. En effet, dans le cas où cela arriverait, chacun pourrait emprunter les 1500 € manquants, le pot commun ne couvrant la franchise que pour un seul sinistre, et l'app tribechain les y aiderait.

Le temps passe, et 3 autres propriétaires, Celia, Dan et Emma se joignent à eux. Ils sont maintenant 5, et à eux 5, ils ont pu former un pot commun de 7500 €, 1500 € chacun.

Tous les cinq sont d'avis qu'il est improbable que plus d'une de leurs cinq maisons brûle durant la même année, et ils sont prêts à en prendre le risque, quitte à devoir faire un emprunt si cela arrivait, à l'aide de l'app tribe-chain.

Maintenant, chacun d'eux peut choisir une police d'assurance qui va les couvrir avec une franchise de 7.500 euros par sinistre, et donc avec une prime bien plus avantageuse.)

Comme on peut l'imaginer en combinant les deux exemples présentés jusqu'ici, la situation de chaque nœud, représentant la franchise qu'il a à disposition, peut varier. En effet,
- il n'est pas nécessaire que chaque nœud ait un engagement vers chaque autre nœud et les réserves sur chaque nœud peuvent varier, d'autant plus si elles sont engagées à couvrir une pluralité de risques d'une pluralité de nœuds et de manière variable dans le temps ;
- potentiellement, des contributions à l'aval dans les chaînes sont disponibles en plus (comme décrit plus haut).

La prime due peut alors être déterminée en intégrant dans le temps les franchises effectives constatées à chaque instant.

Ainsi, dans ces exemples, les polices d'assurance proposées par l'app tribe-chain sont en mesure d'adapter dynamiquement leurs primes, en utilisant le procédé, en fonction des réserves disponibles sur chaque nœud au moment courant dans le réseau.

### Wallet Nodes (WN)

Lorsque des Wallet Nodes (WN) interagissent, chaque message échangé contient un haché d'un programme (code exécutable) à exécuter par le WN recevant ce message. Les WN offrent ainsi la fonctionnalité des « engagements exécutables » décrites jusqu'ici : chaque WN est une entité devant exécuter des engagements tels que des CCC, des transferts d'engagements, etc.

On va maintenant décrire le mode de réalisation de l'invention selon lequel un WN est mis en œuvre sous la forme d'un système-sur-puce (SoC). A noter que les mêmes principes d'architecture que ceux décrits dans la suite pourront servir à une mise en œuvre des WN comme *« trusted apps »* tournant dans une zone sécurisée du processeur principal, dans un téléphone intelligent ou tout autre dispositif connecté, aptes à garantir que les données des WN sont mémorisées, traitées et protégées dans un environnement isolé et de confiance (par exemple Trusted Execution Environment et ARM^{®} TrustZone^{®}).

On connaît le domaine du chiffrement homomorphique dont le but est essentiellement de permettre de traiter des données chiffrées sans les déchiffrer, notamment sur le Cloud, le but recherché étant de rendre les ordinateurs du Cloud « aveugle ». On peut obtenir le même effet avec le système de l'invention, sans nécessiter un chiffrement homomorphique. En effet, un WN mis en œuvre en un système-sur-puce (SoC) peut servir de « proxy aveugle », en ces sens qu'il décrypte des données reçues en entrée pour les traiter et fournir des résultats chiffrés en sortie, sans dévoiler ni les données reçues en entrée, ni les données produites en sortie, ni même d'ailleurs le programme utilisé pour les produire (ni le code source, ni les étapes effectuées, ni les données de travail, ni aucune autre donnée sensible).

Un ordinateur client (Client) peut faire exécuter son programme (WP) sur un proxy aveugle (WN proxy) par les étapes suivantes :
1. Client prend connaissance au préalable de la clé publique du fabricant du WN proxy (par un moyen quelconque) ;
2. WN proxy envoie à Client la clé publique du WN proxy, signée par le fabricant (certificat), et Client vérifie cette signature par rapport à la clé publique du fabricant (pour s'assurer qu'il s'agit bien d'un WN certifié par ledit fabricant) ;
3. Client détermine le haché du WP (#WP)
4. Client chiffre le WP (§WP) avec la clé publique du WN proxy et l'envoie au WN proxy (et facultativement Client envoie aussi #WP)
5. Prévoir au niveau du WN proxy de stocker alors le §WP (et facultativement stocker aussi #WP en association avec §WP)
6. Client chiffre les données en entrée de l'exécution désirée (§input)
7. Client envoie au WN proxy: §input, #WP ainsi que sa clé publique
8. WN proxy décrypte §WP (correspondant à #WP) ainsi que §input
9. WN proxy exécute WP avec lesdits inputs décryptés, chiffre les résultats (§output) avec la clé publique du Client, envoie §output au Client.

A aucun moment, personne (ni même le propriétaire du WN proxy) n'a accès ni au WP, ni aux inputs ni aux résultats non chiffrés du traitement.

En clair, cet aspect de l'invention est mise en œuvre en un système pour l'exécution sécurisée de programmes dans une architecture comprenant un ensemble d'équipements reliés en réseau, caractérisé en ce qu'il comprend dans au moins un équipement, un système-sur-puce (SoC) sécurisé dans lequel est mémorisé de façon inaccessible autrement que par le SoC une clé privée de SoC,
un SoC pouvant communiquer avec un autre équipement uniquement par des messages et étant apte à exécuter des programmes seulement en réponse à la réception de messages,
un SoC étant apte à communiquer à d'autres équipements une clé publique de SoC correspondant à ladite clé privée de SoC et certifiée par le fabricant du SoC,
un équipement étant apte à adresser à un SoC un message contenant un programme à exécuter par le SoC, chiffré avec ladite clé publique de SoC,
un SoC étant apte à mémoriser le programme chiffré ainsi qu'un haché du programme avant chiffrement,
l'équipement étant apte en outre à adresser au SoC un message contenant des données d'entrée (input) pour un programme, également chiffrées avec ladite clé publique de SoC, ainsi que le haché dudit programme, et une autre clé publique destinée à chiffrer le résultat de l'exécution dudit programme sur lesdites données d'entrée, pour déchiffrement par l'équipement à l'aide d'une autre clé privée correspondante,

le SoC étant apte à déchiffrer le programme chiffré et, en réponse à un tel message contenant des données d'entrée, de façon sécurisée, (i) vérifier que le haché du programme déchiffré à exécuter sur les données d'entrée une fois déchiffrées correspond au haché reçu avec lesdites données d'entrée chiffrées, (ii) déchiffrer les données d'entrée reçues de l'équipement, et (iii) seulement en cas de correspondance entre les hachés, à exécuter le programme après déchiffrement, à l'exclusion de toutes autres instructions, sur les données d'entrée après déchiffrement, à l'exclusion de toutes autres données, puis à chiffrer le résultat de l'exécution avec ladite autre clé publique et envoyer le résultat ainsi chiffré, à l'exclusion de tout autre résultat sauf ceux éventuellement prévus par construction dans le SoC, à l'équipement,
de manière assurer l'inaccessibilité sans discontinuité à la fois des données d'entrée, de leur traitement et du résultat du traitement.

Les WN servent ainsi de « proxy aveugle » puisqu'ils n'échangent que des données chiffrées qu'ils décryptent mais ne révèlent pas, et qu'ils effectuent les traitement demandés sans les révéler non plus.

On va maintenant décrire la fonctionnalité d'engagements exécutables des WN jouant le rôle d'« entités » comme décrit plus haut.

Lorsque des WN interagissent, chaque message échangé contient un haché d'un programme en tant que spécification d'un engagement exécutable, tel qu'un CCC (décrit plus haut), que le WN recevant ce message doit exécuter. (Les transferts d'engagements décrits plus haut sont le cas où la réception dudit message déclenche l'exécution d'un engagement exécutable comprenant la mise à jour de soldes pour les entités émettrices respectives des engagements transférés, comme déjà décrit.)

Lorsque deux WN interagissent par messages incluant un même haché d'un programme à exécuter, ils exécutent nécessairement deux programmes identiques constitués d'instructions de réaction à de tels messages reçus de part et d'autre et représentant ainsi des engagements exécutables réciproques préalablement acceptés entre eux.

Les WN peuvent aussi s'échanger des messages (WM) incluant des hachés différents (de programmes (WP) différents à exécuter), mais dont la correspondance est garantie au moyen d'une spécification commune des WP à exécuter. Dans une architecture en P2P, cette garantie est obtenue en incluant dans les WM, en plus du haché du WP, le haché de cette spécification commune (dans un mode de mise en œuvre très simple, lesdits hachés de WP peuvent faire partie d'une liste de hachés de WP, et le haché de cette liste est également inclus dans les WM échangés).

La réception, par un WN, d'un WM (contenant le haché du code exécutable qui a généré ce message) déclenche dans ce WN des instructions (connues sous le terme « Root of Trust ») sécurisées et non modifiables qui chargent le code exécutable dont le haché correspond audit haché inclus dans le message reçu. L'exécution qui suit de ce code exécutable dans ledit WN est ainsi prédéterminée par rapport à ce message reçu et est apte à mettre à jour et générer encore d'autres messages qui vont eux-mêmes propager ce même haché vers encore d'autres WN.

L'invention permet ainsi de garantir les engagements exécutables (décrits plus haut) que représentent les WP : d'une part le WN recevant un WM réagit selon l'engagement exécutable spécifié dans le WM reçu, d'autre part, ce WM a lui-même été généré dans le cadre du même WP (puisque produit par le même code exécutable WP).

Un SoC mettant en œuvre un WN comprend au moins les sous-systèmes suivants :
- un processeur (« Microcontroller » ou Micro-contrôleur),
- un sous-système « Wallet Programs » comprenant des WP, codes exécutables quelconques, gérant des variables d'état « Persistent State Variables » qui leurs sont exclusifs,
- un sous-système « Check / Load » comprenant un code exécutable spécifique de sélection et chargement de WP,
- un sous-système de signature « Sign » fournissant des fonctions cryptographiques, notamment de signature de WM en sortie et de décryptage de WM en entrée,
- un sous-système d'entrée/sortie « I/O » apte à recevoir un WM en entrée - des méta-données « Manifest » sont associées à chaque WP, pour spécifier la nature et la structure de ses entrées via le sous-système I/O.

Chaque WN est couplé à un dispositif tel que smart phone ou ordinateur avec lequel il est apte à communiquer via le sous-système I/O.

Les WN sont aptes à interagir les uns avec les autres en réseau et, via le sous-système I/O :
- les WN sont aptes à s'échanger des WM comprenant le haché du WP, et
- en réaction à la réception d'un WM, ledit code exécutable Check/Load sélectionne et charge, à partir dudit sous-système Wallet Programs, le WP spécifique dont le haché correspond audit haché inclus dans ledit WM.

Pour chaque émission d'un WM lors de l'exécution d'un WP, avant de signer son contenu (et d'inclure cette signature dans le WM), le sous-système Sign génère le haché du WP en cours d'exécution et l'insère dans le WM (ou vérifie le haché que comprend le WM), garantissant ainsi que le même haché est repropagé de message en message.

Avantageusement, ledit WM inclut la signature (certificat) par le fabricant de la clé publique du WN (correspondant à la clé privée du WN au moyen de laquelle ladite signature par le sous-système Sign a été générée). (La signature par le fabricant de ces clés est publique et disponible, mais peut néanmoins être aussi incluse dans la WM en question).

Enfin, dans un mode de réalisation particulier, le réseau en question comprend aussi, outre des WN (sécurisés), des WN non-sécurisés. Au moins à chaque « WN non sécurisé » correspond au moins un WN « WN témoin » apte à valider ses modifications de variables d'état. Le fait d'avoir au moins un WN témoin qui valide les mise-à-jour de variables d'état, permet de ne pas exiger que le WN non-sécurisé dont il est témoin soit mis en œuvre de manière sécurisée selon le SoC de la présente invention, et offre encore d'autres avantages, comme décrit plus loin. Un WN non sécurisé peut être mis en œuvre directement dans un ordinateur ou un smartphone classique, ou encore en tirant parti de technologies génériques de sécurisation telles que ARM^{®} TrustZone^{®}.

On va maintenant décrire les WNs en détail en en présentant les différentes caractéristiques.

A chaque WN est associée une paire de clés cryptographiques publique/privée :
- la clé privée est secrète (c'est-à-dire cachée dans la puce et non connue hors de la puce) - elle est soit gravée dans la puce comme dans les TPM ou les cartes à puce, soit stockée de manière sécurisée, soit automatiquement générée dans la puce selon la technologie « PUF » (Physically Unclonable Function) introduite dans [P. S. Ravikanth, « Physical one-way functions », PhD Thesis, MIT, 2001] et [Pappu& al., « Physical one-way functions, Science, 297(5589):2026-2030, 2002] et mise en œuvre notamment dans les SoC FPGA Smartfusion2 et d'autres puces du fabricant Microsemi, ou selon une technique analogue ;
- la clé publique est signée par le fabricant (pour certifier que la puce est bien un WN).

Chaque WM émis par un WN comprend, outre un contenu de message proprement dit,
- le haché du WP qui a généré ce WM ;
- la signature par ce WN dudit haché, ainsi que du contenu proprement dit du WM, pour signifier : « ce message a bien été généré par ce WP tournant dans ce WN » - la clé publique correspondant à la clé privée ayant servi à cette signature est également jointe ;
- (et la clé publique correspondant à la clé privée du WN, ayant servi à cette signature, est elle-même certifiée par le fabricant, comme déjà mentionné - le WM peut inclure cette signature ainsi que la clé du fabricant).

Ladite signature (dudit haché et du contenu proprement dit du WM) est effectuée par le sous-système Sign qui génère ledit haché à partir du contenu du WP en cours d'exécution. L'architecture du système garantit ainsi que le haché figurant dans les WM est bien le haché du WP qui l'a généré.

Les WN proviennent d'un même fabricant ou d'un ensemble de fabricants mutuellement agréés. Lorsqu'un WM est reçu par un WN, ce dernier vérifie que la clé publique permettant de déchiffrer ladite signature (censée être produite par le WN émetteur de ce WM) est certifiée par un fabricant agréé (et ignore ce WM dans le cas contraire).

Ainsi, le système et le procédé de l'invention garantissent que, lorsqu'un WN communique un WM à un WN destinataire (le cas échéant via les dispositifs respectifs, tels que smart phone ou ordinateur, auxquels ils sont couplés) :
- ledit WM a été généré par un WP dont le haché est inclus dans ledit WM lui-même ;
- ledit WM n'a pas été altéré - en effet, l'intégrité du WM est garantie par le fait que le WM a été signé par le WN qui l'a produit et que cette signature est certifiée par un fabricant agréé ;
- l'authenticité dudit WM est aussi garantie (du fait que la clé de signature de la part du WN est certifiée par un fabricant agréé, c'est-à-dire signée par ce dernier) - cette authenticité signifie non seulement que le WN est ainsi identifié mais aussi que ce WN qui est identifié a bien exécuté ledit WP pour générer ce WM.

Ledit WN destinataire qui reçoit le WM le vérifie et y réagit nécessairement en exécutant le même WP (ceci est décrit plus bas lors de la présentation du sous-système Check/ Load).

Dans la mesure où les WM sont chiffrés (avec la clé publique du WN destinataire) et donc non dévoilés avant leur prise en charge par le WN destinataire, on décourage des volontés éventuelles de filtrage ayant pour but d'empêcher leur réception (et dès le moment où ces WM sont décryptés par le WN destinataire, le code exécutable Check / Load se charge de faire exécuter le même WP imposé par ce WM décrypté, ceci s'effectue automatiquement).

Chaque WN est couplé avec un dispositif tel qu'un smartphone sous système d'exploitation Android^{®} ou avec un ordinateur, par des canaux d'entrée sortie appropriés. Plusieurs modes de réalisation sont possibles pour ce couplage, notamment :
- le WN peut être couplé au smartphone par Wifi, Bluetooth, Bluetooth LE, NFC, etc. et toute technologie de communication sans fil existante ou à venir,
- le WN peut être un composant ARA dans le cadre de Project ARA proposé par Google,
- le WN peut être mis en œuvre dans un dispositif portatif selon le protocole filaire USB ou toute technique de communication filaire existante ou à venir.

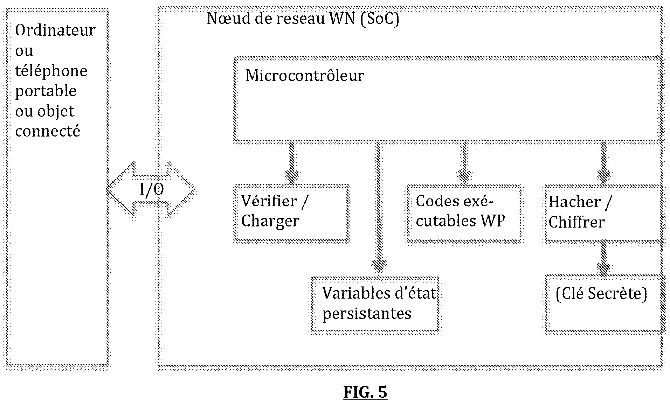

Le WN est ici implémenté sous forme d'une puce ayant les parties suivantes (sous-systèmes) qui sont schématiquement représentées sur la Figure 5 :
- I/O
- Microcontroller
- Check / Load
- Wallet Programs
- Pers. State Variables
- Sign
- (Secret Key)

Le WN est mis en œuvre en un « système-sur-puce » (SoC - System on Chip) garantissant la non altération des restrictions d'accès (énoncés ci-après) entre ses différentes parties, système auquel des entrées/sorties (I/O) sont fournies par un dispositif (Computer or Smartphone) tel qu'un smartphone ou un ordinateur.

Au sein du SoC se trouve un microcontrôleur (Microcontroller) comprenant un processeur généraliste (« general-purpose processor », tel qu'un processeur implémentant l'architecture ARM v7-M) muni d'une mémoire interne. Seul ce processeur peut accéder à la partie « Sign » fournissant des fonctions cryptographiques, notamment la fonctionnalité de signature par la puce, cette dernière étant à son tour la seule à pouvoir accéder à la partie contenant la clé secrète de la puce (Secret Key). Alternativement, la technologie PUF (déjà mentionnée plus haut) permet d'éviter de stocker la clé secrète et ne la générer que sur demande (au sein de la partie Sign). En plus, des fabricants tels que Microsemi fournissent encore d'autres moyens (des moyens d'offuscation) permettant de ne jamais voir la clé secrète in extenso. Ces options possibles sont les raisons pour lesquelles la partie « (Secret Key) » est présentée entre parenthèses dans la figure puisque dans certaines options de mise en œuvre la clé secrète n'est pas stockée.

La partie Wallet Programs mémorise des ainsi que leurs haché respectifs. Le Microcontroller charge dans sa mémoire de manière sécurisée, en fonction du haché du WM entrant (ou de l'entrée via l'I/O) comme décrit ci-après, l'un ou l'autre de ces WP. Ces derniers sont aptes à manipuler, dans une mémoire non volatile, des variables d'état persistantes (Pers. State Variables) qui ne sont accessibles que par le Microcontroller. Le sous-système Pers. State Variables ne rend accessible lesdites Pers. State Variables que seulement pour l'exécution des WP respectifs spécifiques auxquels ces variables appartiennent. Ces variables d'état ne peuvent ainsi être accédées/manipulées que (exclusivement) par leurs WP respectifs.

Au power-up et power-reset, le code exécutable stocké dans la partie « Check/Load » est le premier à être chargé et exécuté dans le Microcontroller, et des haché sont alors associés aux WP disponibles dans la partie « Wallet Programs ». Lorsqu'un WM arrive (via l'I/O), cette partie Check / Load en vérifie l'intégrité et l'authenticité (la clé publique du WN émetteur de ce WM est utilisée pour (i) décrypter la signature par ce WN émetteur, (ii) vérifier l'intégrité du message et (iii) obtenir le haché du WP; la clé de la signature de certification du fabricant est vérifiée et la clé publique qu'elle certifie comme étant une clé de WN permet de confirmer l'authenticité dudit WM), le WP correspondant audit haché est, le cas échéant, sélectionné dans la partie « Wallet programs » et chargé pour exécution. L'émission de WM, le cas échéant, par ledit Wallet program, se fait par l'intermédiaire de la partie Sign qui vérifie le haché inséré dans le WM en préparation avant de le signer. Avantageusement, un « Manifest » déclarant les entrées (via la partie « I/O ») prévues pour un WP est associé à ce dernier ; à chaque entrée I/O un haché du WP visé est avantageusement associé ; et lors d'une entrée I/O, sa conformité (au Manifest) est vérifiée par le code exécutable « Check / Load » avant que le WP correspondant audit haché soit, le cas échéant, sélectionné dans la partie « Wallet programs » et chargé pour exécution.

Comme déjà dit, en variante le code exécutable qui est chargé dans le Microcontroller n'est pas le WP en entier dont le haché est fournit dans le WM, mais une partie seulement (un module) de ce WP, et pour le permettre l'information fournit dans le WM peut avantageusement inclure, en plus du haché de l'ensemble de tels modules, la spécification du ou des modules qui sont susceptibles de réagir au WM. (Dans ce texte, pour simplifier et de façon non limitative, on considère que le WP est chargé en entier.)

Par ailleurs, les WP (ou leurs modules) peuvent être organisés en versions ; les haché de versions précédentes accompagnent alors le haché du fournit dans le WM et, pour chaque variable d'état (Persistent State Variables) stocké dans la puce, le haché de la version courante du qui l'a dernièrement manipulée lui est associé. Ainsi les variables d'états d'un WP peuvent être mis à jour par celui-ci même lorsque sa version évolue.

A noter que cette puce peut être mise en œuvre en une carte à puce, ou dans un SoC (« customizable SoC FPGA ») classique du marché tel que le SmartFusion^{®}2, du fabricant Microsemi, offrant une partie FPGA (Field Programmable Gate Array) *sécurisable,* dans lequel peut avantageusement être généré une *clé secrète* SRAM PUF (« physically unclonable function (PUF) key enrollment and regeneration capability from Intrinsic ID ») et qui inclut au sein même de la puce, en technologie ASIC, un *micro-contrôleur* (processeur ARM^{®} Cortex^{™}-M3 implémentant l'architecture ARM v7-M) avec sa mémoire interne.

Bien évidemment, l'architecture de l'invention peut aussi être mise en œuvre entièrement en ASIC ou en encore d'autres technologies de fabrication de puces.

On va maintenant décrire divers exemples d'interactions entre WN dans lesquels un WP est déclenché par l'arrivée d'une entrée I/O à partir d'un smartphone avec lequel un WN est couplé, cette entrée I/O comprenant le haché du WP à exécuter et des paramètres d'entrée, par exemple un montant ou encore l'adresse (ou clé publique) d'un WN destinataire d'un WM qui est à émettre ainsi que le moyen de l'émettre (on peut par exemple prévoir de l'envoyer par email). Comme déjà décrit, le code « Check/Load » vérifie la conformité d'une telle entrée I/O au « Manifest » associé au WP visé par cette entrée I/O, avant que ce dernier soit sélectionné (dans la partie Wallet Programs) et chargé pour exécution. Toutefois, cette sélection et chargement ne se font que si le WP en question est déjà stocké (dans la partie Wallet Programs). Ainsi, pour simplifier la description, on considère que le WP visé par l'entrée en question est déjà stocké.

On va tout d'abord décrire un procédé d' « identification anonyme » en utilisant le système et le procédé de l'invention.

Selon [http://en.wikipedia.org/wiki/Biometric_passport], un passeport électronique comprend une puce permettant aux données du passeport d'être transférées par la technologie sans fil RFID. Les caractéristiques de la puce sont documentées dans le document 9303 de l'Organisation de l'aviation civile internationale (OACI). La puce contient un fichier (SOD) qui stocke les haché de tous les fichiers stockés dans la puce (photo, empreintes digitales, etc.) ainsi qu'une signature numérique de ces haché. La signature numérique est réalisée en utilisant une clé de signature de document qui est elle-même signée par une clé de signature de pays. Les lecteurs RFID doivent avoir la liste de toutes les clés publiques de pays utilisés pour vérifier si la signature numérique est générée par un pays.

Pour simplifier la description (l'extension au cas réel étant triviale), supposons qu'un passeport électronique comprenne une puce RFID (qui peut être lue par un lecteur RFID), et que cette puce présente le contenu du passeport signé par un gouvernement dont la clé publique est connue, ainsi que cette clé publique.

Ainsi, par le biais de la partie I/O (à partir du smartphone du possesseur du passeport, avec lequel un WN est couplé), les données suivantes sont communiquées à ce WN:
- le contenu du passeport,
- la signature par le gouvernement du contenu de passeport,
- la clé publique du gouvernement correspondant à cette signature,
- l'adresse (la clé publique) du WN destinataire du WM à émettre (pour communiquer le résultat de l'identification anonyme à effectuer) et le mode de communication de ce WM à ce destinataire, en l'occurrence on considère ici qu'il s'agit du protocole TeleHash (ou analogue) et le WM est chiffré avec la clé publique du WN destinataire,
- le haché du WP visé (l'application d'identification anonyme).

Le Check/Load analyse cette entrée I/O, vérifie que ledit haché du WP correspond bien à un WP stocké (dans la partie Wallet Programs de la puce) et vérifie la conformité de cette entrée par rapport aux paramètres d'entrée spécifiés dans le Manifest associé à ce WP.

Une fois chargé dans le Microcontroller, le WP est exécuté et effectue les étapes suivantes :
1. Vérifier si la clé publique du gouvernement est authentique (en vérifiant si elle est incluse dans une liste de clés publiques de gouvernement connus);
2. Vérifier si la signature peut être décryptée avec cette clé;
3. Obtenir le haché résultant de ce décryptage;
4. Vérifier si le haché du contenu de passeport est le même que le haché résultant du décryptage de la signature, et
5. Produire un WM pour le destinataire spécifié, avec seulement ce haché en guise d'identifiant anonyme fourni (le contenu de passeport n'est pas révélé). Outre ce contenu proprement dit, le WM comprend le haché dudit WP, ainsi que la signature par le WN de ce contenu proprement dit et de ce haché du WP.

En conséquence, le titulaire du passeport est identifié avec seul le haché du contenu de ce passeport (et donc de manière anonyme).

En variante, au lieu de communiquer (dans le WM) le haché du contenu de passeport, le WP communique le haché du {contenu de passeport + une autre chaîne donnée}, cette dernière pouvant par exemple être le mois et l'année en cours (en l'occurrence, l'identification générée ne servira alors que pendant le mois en cours), offrant ainsi un degré plus élevé d'anonymat. A noter que, dans ce cas, si cet identifiant est utilisé plusieurs fois dans le même mois, l'utilisateur ne pourra cacher qu'il s'agit de l'identification de la même personne, ce qui correspond bien à la fonction attendue d'un identifiant.

Ledit WN destinataire (receveur dudit WM) va trouver cet identifiant anonyme au sein dudit WM reçu après l'avoir décrypté (si l'option de chiffrage du WM est adopté).

Voici donc les étapes à la réception de ce WM (après l'avoir décrypté) :
Au sein du WN receveur, le code Check / Load sélectionne le WP correspondant au haché (de WP) reçu et le charge dans le Microcontroller. Le WP est exécuté pour communiquer l'identifiant anonyme au smartphone via l'I/O.

A noter que cette même application d'identification anonyme à partir d'un passeport peut se faire avec seulement un WN pour le titulaire du passeport (sans avoir besoin d'un deuxième WN pour le récepteur de l'identifiant anonyme), le WP communiquant au smartphone via l'I/O l'identifiant anonyme du titulaire du passeport, ainsi que le WP utilisé, dûment signés par le WN (dont la clé est certifiée par le fabricant). L'utilisateur du smartphone auquel le WN est couplé pourra ensuite se faire valoir de cet identifiant anonyme en le communiquant à un destinataire par un moyen de son choix (par exemple par email) et ce destinataire pourra vérifier que l'identifiant anonyme a bien été généré par le bon WP (non altéré vis-à-vis de son haché) puisque généré dans un WN qui a signé que c'est le cas, WN lui-même digne de confiance puisque certifié par le fabricant dont la clé est elle-même vérifiable. (Mais évidemment, il est plus aisé de passer par un WN 2 qui prend toutes ces vérifications en charge automatiquement.)

La Figure 5 présente schématiquement ce procédé. On y voit que le contenu du passeport lu par RFID sur le smartphone est fourni au WN 1 via son I/O, avec le haché « #Wallet Pgm ». A réception de cette entrée I/O, le WN 1 exécute le WP « Wallet Pgm » (dont le haché est celui communiqué dans la même entrée I/O), pour (i) vérifier la signature du gouvernement « Govt Signature » dans le contenu du passeport, (ii) générer l'identifiant anonyme « Anonymous ID » et finalement (iii) émettre un WM « Wallet Msg » comprenant « Anonymous ID » et le même haché « #Wallet Pgm » à destination de WN 2. De façon non illustrée, « Anonymous ID, #Wallet Pgm » est signé par WN 1, dont la clé est certifiée par le fabricant (certification qui peut aussi être communiquée dans Wallet Msg), et avantageusement Wallet Msg peut être chiffré avec la clé publique de WN 2. Enfin, WN 2 reçoit Wallet Msg (et le décrypte), sélectionne ainsi le même WP « Wallet Pgm » pour transmettre Anonymous ID au smartphone via l'I/O pour affichage (« Display the Anonymous ID »).

Dans le WN 1, au lieu de baser l'identification sur une signature numérique d'un gouvernement, on peut bien entendu la baser sur une signature fournie par un dispositif d'identification biométrique.

On va maintenant décrire un procédé très simple de transfert d'unités de valeur de la part d'un premier WN en faveur d'un second WN. On remarquera que la sécurisation de la bonne exécution de WP au niveau des WN rend impossible le « double-spending » (contre lequel les technologies de construction de Chaîne de blocs de Bitcoin et ses descendants apportent une solution - ainsi le problème que ces technologies tentent de résoudre, c'est-à-dire leur raison d'être, n'existe tout simplement plus).

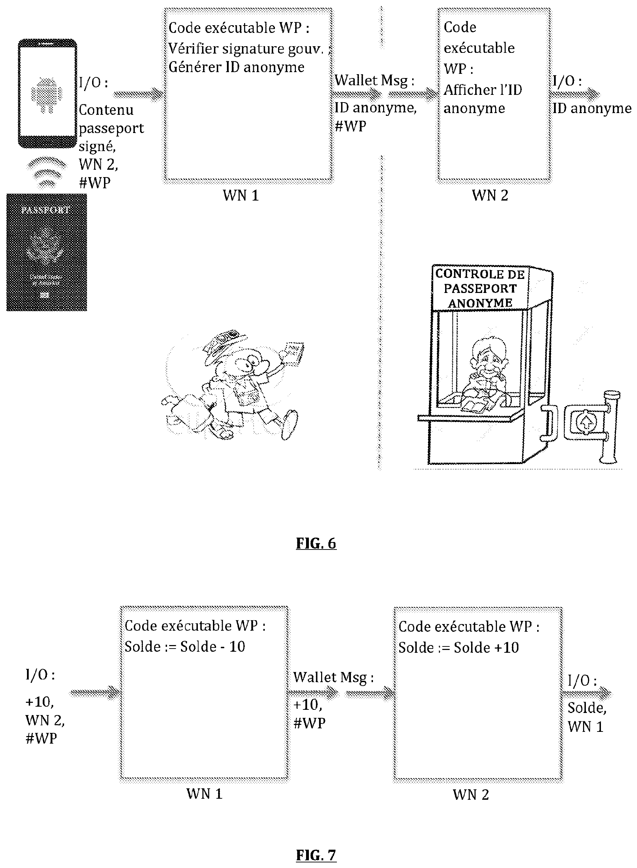

La Figure 6 présente schématiquement le cas d'un WP « Wallet Pgm » qui dans « WN 1 » prend comme entrée I/O un transfert de 10 unités de valeur, en faveur de « WN 2 », et soustrait en conséquence 10 unités d'une variable d'état « Balance » (signifiant ici le solde d'unités de valeur disponibles dans ce WN). Ici encore, la figure ne montre pas que dans le WM « Wallet Msg » généré, le contenu du message proprement dit « +10 » et le haché « #Wallet Pgm » sont signés par WN 1, dont la clé de signature est certifiée par le fabricant. Le receveur (WN 2) de Wallet Msg y réagit en sélectionnant (par Check/Load) le même WP « Wallet Pgm » qui ajoute 10 unités à sa propre variable d'état « Balance » et fournit (au smartphone auquel il est couplé), via l'I/O, la nouvelle valeur de la variable Balance ainsi que la source WN 1 de sa mise à jour.

Dans la mesure où, automatiquement, pour chaque transfert d'un montant donné, un WP spécifique (en l'occurrence, « Wallet Pgm ») soustrait ce montant dans la variable d'état « Balance » (solde disponible), et puisque seul ledit WP spécifique peut manipuler cette variable d'état, un « double-spending » est impossible.

On va maintenant décrire un procédé « P2P Insurance » consistant en deux étapes : (1) un blocage d'unités de valeur par un WN « aidant » en faveur d'un WN « aidé » et une émission par ce WN aidant d'un WM vers ce WN aidé indiquant ce blocage et (2) paiement par le WN aidant (à noter que dans le cas réel, il y aura plusieurs WN aidants) sur réception d'un WM « Claim » de la part d'un WN aidé muni d'une signature (prévue d'avance) d'un arbitre pour valider le Claim en question.

La Figure 7 présente schématiquement ces deux étapes : l'étape de blocage et l'étape d'aide lors de la présentation d'un Claim.

Dans l'étape de blocage (Step 1), WN 1 bloque 10 unités de valeur comme aide potentielle de WN 2. Ainsi, le WP « p2pInsurance » augmente la variable d'état Refill[WN2] de 10 unités de valeurs (WN2 signifiant WN 2) et génère le WM « Wallet Msg 1 » informant WN 2 de cette aide potentielle de +10. WN 2 le reçoit, le décrypte et met à jour d'une part une variable d'état mémorisant que WN 1 l'aide potentiellement pour +10 et que d'autre part la variable d'état « Help » (aide potentielle totale) est augmentée de 10.

L'étape (Step 2) de paiement sur présentation de « Claim » est initiée par « l'aidé » WN 2 qui au préalable recueille la signature de l'arbitre, pour un Claim de 5 unités de valeur à verser à WN 3, et notifie les aidants, en l'occurrence WN 1 seulement (par le WM « Wallet Msg 2 ») qui inclut ladite signature recueillie et le montant du Claim en question. Dès que Wallet Msg 2 est reçu et décrypté pour y trouver le haché « #p2pInsurance », le code « Check / Load » de WN 1 sélectionne le WP « p2pInsurance » (ayant ce haché #p2pInsurance) qui, après avoir vérifié ladite signature de l'arbitre, effectue le transfert de 5 unités de valeur à WN 3.

Dans le protocole mis en œuvre, le WN aidant (WN 1) ne peut fuir ses engagements (de payer en cas de « Claim » justifié par signature de l'arbitre). En effet, d'une part le WM reçu « Wallet message 2 » est chiffré et il n'y a donc pas moyen de savoir s'il s'agit d'un message de demande de paiement (ce pourrait aussi bien être au contraire un paiement en faveur de WN 1 par exemple), et d'autre part *les WM sont régulièrement ré-envoyés tant que le récepteur n'a pas confirmé réception* (par un Accusé de Réception, décrit plus bas). L'utilisateur qui reçoit ces WM ne peut savoir ni de quel WM (et quel contenu de message proprement-dit) il s'agit, ni qu'il s'agit d'un même WM qui est ré-envoyé (ou s'il s'agit d'un tout nouveau WM), dans la mesure où tous les WM sont chiffrés.

Dans un mode de réalisation préféré, le WP qui est exécuté attend de recevoir un Accusé de Réception pour chaque WM émis, ou pour un ensemble de WM émis, avant d'exécuter les instructions qui suivent ces émissions de WM.

### Utilisation d'un Nonce pour les Accusés de réception

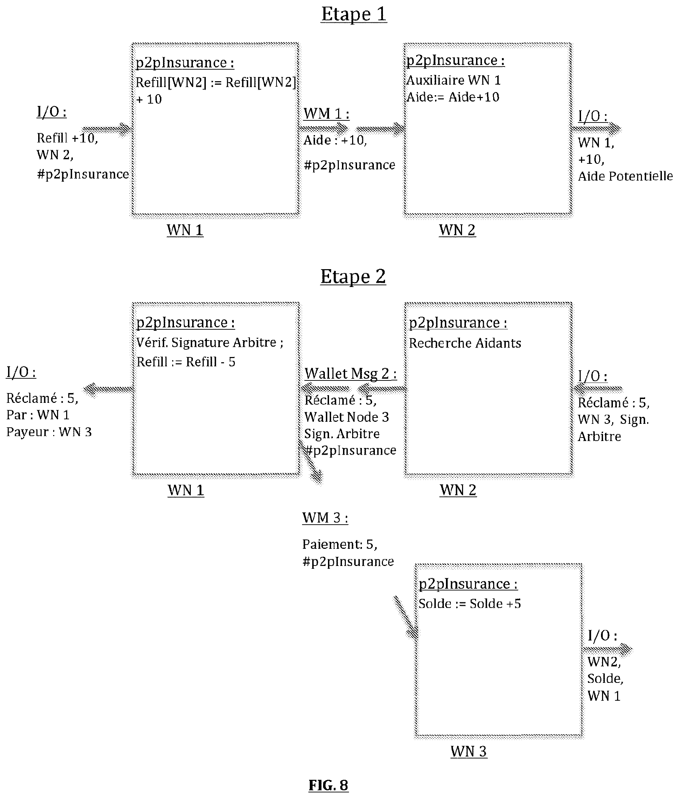

La Figure 8 présente schématiquement la réception par un WN « ReceiverWN » d'un WM. Ce dernier est chiffré avec la clé publique de ReceiverWN (ce qui n'est pas montré dans la figure) et inclut un nonce cryptographique (un nombre aléatoire utilisé une seule fois). L'Accusé de Réception « ACK » que le ReceiverWN retourne reproduit ce nonce et démontre ainsi que ReceiverWN a bien reçu le WM spécifique en question. ACK peut aussi être chiffré (avec la clé publique de SenderWN, l'émetteur du WM en question). La Figure 8 montre aussi qu'un WM émis inclut la signature du WN qui l'émet. Toutefois, ce que cette figure ne montre pas est que les WM comprennent aussi normalement (de préférence) la signature par le fabricant de la clé publique du WN émetteur (c'est à dire le certificat du fabricant).

Enfin, comme déjà mentionné, les WM sont (de préférence) réémis régulièrement tant que les accusés de réception (ACK) ne sont pas reçus en retour.

Par ailleurs, comme déjà décrit plus haut, l'utilisation d'un Registre que les WN sont tenus de consulter régulièrement, permet de prouver l'envoi d'un WM en l'insérant dans le Registre.

On va maintenant décrire une architecture comprenant, en plus des WN (sécurisés) tels que décrits, des WN « témoins » dont le rôle est de témoigner de la bonne exécution des WP dans les WN « de base », que ces derniers soient sécurisés ou pas.

Ainsi, au moins un WN *i'* « témoin » est associé à chaque WN *i* « de base » (sécurisé ou pas) émettant des WM. Lorsqu'un WN de base reçoit une entrée I/O, il notifie le (ou les) WN témoin qui lui a été affecté. Ce dernier exécute alors le même WP, qui le cas echéant manipule des variables d'état et émet des WM. Les mises-à-jours de variables d'état dans les WN de base sont aussi notifiées aux WN témoins. La concordance entre les résultats des traitements et lesdites notifications est vérifiée. Toute non-concordance, le cas échéant, invalide l'opération du WN de base correspondant.

Les WN témoins peuvent être sélectionnés aléatoirement dans un DHT [http://en.wikipedia.org/wiki/Distributed_haché_table] et un ou plusieurs témoins peuvent ainsi être affectés aléatoirement (et de manière aveugle) à chaque WN.

Les WN témoins peuvent être spécifiquement générés ou sélectionnés par le ou les fabricants.

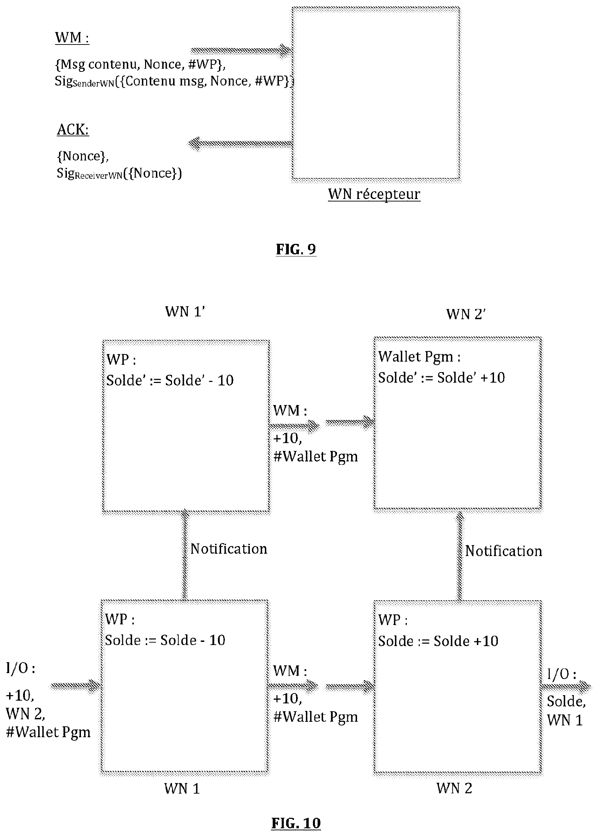

La Figure 9 présente l'exemple du paiement présenté à la Figure 6, mais avec les témoins respectifs WN 1' et WN 2'. L'entrée I/O déclenchant l'exécution de Wallet Pgm, ainsi que chaque opération sur les variables d'état de WN 1 et 2, sont communiquées au WN témoin correspondant (ceci est représenté par la flèche « Notification »). Les témoins exécutent ainsi les mêmes Wallet programs, mettent à jours les mêmes variables d'état (mais pas forcément sur de mêmes valeurs, comme décrit ci-après) et s'envoient les mêmes WM que leurs WN correspondants. Les résultats de traitements sont comparés auxdites notifications pour validation. Ce schéma peut être appliqué à des WN de base qui sont sécurisés ou non sécurisés.

Avantageusement, des techniques de chiffrement homomorphique peuvent être mis en œuvre pour ne pas dévoiler aux témoins les valeurs dans les variables d'états.

On peut aussi, dans certains WP, mettre en œuvre une simple translation de valeurs dans les variables d'état telles que « Balance » (solde). Ainsi, dans cette approche, dans la Figure 9, les variables d'état « Balance' » de WN 1' et WN 2' respectivement ne sont pas initialisées aux mêmes valeurs que les valeurs initiales respectives de « Balance » dans WN 1 et WN 2. Lorsque les opérations sur les variables d'état de Node Wallet 1 et Node Wallet 2 sont communiquées au WN témoins respectifs correspondants (communication représentée par la flèche « Notification »), les valeurs courantes de ces variables d'état ne sont pas communiquées, seules les opérations telles que -10 et +10 le sont.

Une telle architecture de système et procédé où des WN témoins confirment des résultats d'exécution de WN de base, permet de relaxer les exigences de sécurisation au niveau du hardware. On peut alors tolérer dans un ensemble de WN un certain nombre de WN qui ne sont pas sécurisés au sens de la présente invention, en particulier ceux dont les montants traités sont relativement faibles et limités.

Un autre avantage d'une telle architecture est que les WN témoins peuvent servir à garder des données dont les possesseurs de WN de base (sécurisés ou pas) peuvent se prévaloir en cas de perte.

On notera enfin qu'un ensemble de WN formant communauté, et/ou les WN témoins correspondants, peuvent faire appel à un ensemble de « WN séquenceurs » pour ordonner leurs opérations lorsqu'il s'agit de les mémoriser de manière ordonnée dans une base de données partagée (et éventuellement distribuée) telle qu'une chaîne de blocs. Ladite communauté élit un nombre impair de WN séquenceurs (appelé liste de WN séquenceurs) aptes à fournir conjointement le service de séquencement désiré.

Une demande d'un numéro de séquence peut être soumis par un WN (ou un WN témoin) à n'importe quel WN séquenceur. En cas de non réponse, le WN demande un numéro de séquence au WN séquenceur suivant disponible dans la liste de WN séquenceurs. Ces derniers décident entre eux comment attribuer les numéros de séquence, comme suit :
- Lorsqu'une demande de séquence est reçue par un WN séquenceur, ce dernier propose le numéro de séquence suivant le dernier utilisé connu aux autres WN séquenceurs,
- Si cette proposition vient avant une autre demande de numéro de séquence, alors elle est approuvée, sinon elle est rejetée.
- Lorsque le nombre d'approbations est supérieur à la moitié du nombre de WN séquenceurs accessibles, le numéro de séquence proposé est attribué.

L'algorithme de ce procédé peut être comme présenté en annexe A.

### Annexe A

```
 SequencerNode {
 List<SequencerNode> otherSequencerNodes;
 int nextSequenceNumber = 0;
 synchronized int getSequenceNumber() {
 int votes = 0;
 while ( votes < (otherSequencerNodes.size() + 1)/2) {
 nextSequenceNumber++;
 vote = 1;
 for ( SequencerNode sn : otherSequencerNodes) {
 int v = sn.getApproval(nextSequenceNumber);
 votes += v;
 }
 }
 return nextSequenceNumber;
 }
 synchronized int getApproval( int nextN ) {
 int result = 0;
 if (nextN > this.nextSequenceNumber) {
 result = 1;
 this.nextSequenceNumber = nextN ;
 }
 return result;
 }
 }
```

## Revendications

1. Système pour l'exécution de codes exécutables « Wallet Program » (WP) quelconques constitué par au moins deux nœuds d'un réseau dits « Wallet Nodes » (WN), interagissant entre eux uniquement par des messages « Wallet Messages » (WM) et aptes à interagir l'un avec l'autre uniquement en exécutant au niveau de chaque nœud le même code exécutable (Wallet Program) dont le hâché est inclus dans les Wallet Messages, et visant à ce que des utilisateurs puissent avoir confiance les uns en les autres dans les résultats d'exécution de leurs nœuds respectifs, chacun desdits au moins deux nœuds comportant à cet effet un processeur, une mémoire et :
- un sous-système de codes exécutables (WP) aptes à être exécutés par le nœud,
- un sous-système de gestion des codes exécutables (Check/Load) apte, en réaction à la réception d'un message (Wallet Message) contenant le haché, à sélectionner et charger pour exécution le code exécutable quelconque dont le haché du contenu correspond audit haché inclus dans ledit message (Wallet Message),
- un sous-système de signature (Sign) des messages (Wallet Messages) échangés, apte à générer un haché d'un code exécutable couramment chargé, à signer les messages émis et à vérifier la signature des messages reçus, garantissant ainsi que le même haché est re-propagé d'un message reçu à un message émis,
- un sous-système d'entrée-sortie (I/O) permettant de communiquer avec d'autres noeuds pour échanger les Wallet Messages.

## Patentansprüche

1. System zur Ausführung ausführbarer Codes "Wallet Program" (WP) beliebiger Art, umfassend mindestens zwei Knoten eines Netzwerks, bezeichnet als "Wallet Nodes" (WN), die ausschließlich über Nachrichten, bezeichnet als "Wallet Messages" (WM), miteinander interagieren und miteinander nur dadurch interagieren können, dass auf der Ebene jedes Knotens derselbe ausführbare Code (Wallet Program) ausgeführt wird, dessen Hashwert in den Wallet Messages enthalten ist,
wobei das System darauf abzielt, dass Benutzer einander hinsichtlich der Ausführungsergebnisse ihrer jeweiligen Knoten vertrauen können,
wobei jeder der mindestens zwei Knoten zu diesem Zweck einen Prozessor, einen Speicher sowie Folgendes umfasst:
- ein Subsystem ausführbarer Codes (WP), das vom Knoten ausgeführt werden kann;
- ein Verwaltungssubsystem für ausführbare Codes (Check/Load), das in Reaktion auf den Empfang einer Nachricht (Wallet Message), die den Hashwert enthält, einen ausführbaren Code auszuwählen und zur Ausführung zu laden geeignet ist, dessen Inhalts-Hashwert dem in der Nachricht enthaltenen Hashwert entspricht;
- ein Signatursubsystem (Sign) der ausgetauschten Nachrichten (Wallet Messages), das dazu geeignet ist, einen Hashwert eines aktuell geladenen ausführbaren Codes zu erzeugen, gesendete Nachrichten zu signieren und die Signatur empfangener Nachrichten zu überprüfen, wodurch sichergestellt wird, dass derselbe Hashwert von einer empfangenen Nachricht auf eine gesendete Nachricht weitergegeben wird;
- ein Ein-/Ausgabe-Subsystem (I/O) zur Kommunikation mit anderen Knoten zum Austausch der Wallet Messages.

## Claims

1. System for executing executable codes "Wallet Program" (WP) of any kind, comprising at least two nodes of a network referred to as "Wallet Nodes" (WN), interacting with one another exclusively by messages "Wallet Messages" (WM) and capable of interacting with one another only by executing, at the level of each node, the same executable code (Wallet Program) the hash of which is included in the Wallet Messages,
and aiming to ensure that users can trust one another in the execution results of their respective nodes,
each of said at least two nodes comprising for this purpose a processor, a memory and:
- a subsystem of executable codes (WP) capable of being executed by the node;
- a management subsystem of executable codes (Check/Load) capable, in response to the reception of a message (Wallet Message) containing the hash, of selecting and loading for execution any executable code whose content hash corresponds to said hash included in said message (Wallet Message);
- a signature subsystem (Sign) of the exchanged messages (Wallet Messages), capable of generating a hash of a currently loaded executable code, of signing the emitted messages and of verifying the signature of the received messages, thereby ensuring that the same hash is re-propagated from a received message to an emitted message;
- an input/output subsystem (I/O) enabling communication with other nodes in order to exchange the Wallet Messages.
